# EUROPEAN PATENT SPECIFICATION

(11) **EP 4 299 340 B1**
(45) Date of publication and mention of the grant of the patent: **02.04.2025**
(21) Application number: 23181133.2
(22) Date of filing: 23.06.2023
(51) Int. Cl.: B60C 11/00, B60C 11/03, B60C 11/01

(54) **TIRE**
REIFEN
PNEUMATIQUE

(30) Priority: 30.06.2022 JP 2022106155; 30.06.2022 JP 2022106140
(43) Date of publication of application: 03.01.2024
(73) Proprietor: Sumitomo Rubber Industries, Ltd., Kobe-shi, Hyogo 651-0072 (JP)
(72) Inventor: UNO, Hiroki, Kobe-shi, 651-0072 (JP); OMORI, Chisato, Kobe-shi, 651-0072 (JP)
(74) Representative: Manitz Finsterwald Patent- und Rechtsanwaltspartnerschaft mbB

(56) References cited:
- JP-A- 2018 069 783
- US-A1- 2019 315 160
- US-A1- 2021 316 572
- US-A1- 2022 194 133

## Description

### BACKGROUND OF THE INVENTION

### Field of the Invention

The present invention relates to a tire. Specifically, the present invention relates to a tire whose use in sport driving is taken into consideration.

### Background Art

In order to improve performance such as high-speed durability and steering stability, for example, a contour line (also referred to as tread profile) of a tread surface is adjusted (for example, Japanese Laid-Open Patent Publication No. 2016-165925).

In sport driving on a circuit or the like, a vehicle is required to be able to corner at a higher speed. Therefore, for tires, it has been considered to increase the cornering force generated during cornering.

The present inventor has checked the state of generation of a force at a ground-contact surface during cornering by using a finite element method (FEM). As a result, it has been found that a force in a direction opposite to the cornering direction is generated at a part of the ground-contact surface. The force in the direction opposite to the cornering direction reduces the cornering force. In other words, if the generation of the force in the direction opposite to the cornering direction can be suppressed, the cornering force can be further increased. In this case, the tire can contribute to improvement of the cornering performance of the vehicle.

The contour line of the tread surface is composed of a plurality of arcs aligned in the axial direction. There is a concern that depending on the configuration of the contour line, the difference between the outer diameter of a crown portion and the outer diameter of a shoulder portion may be increased. In this case, the ground-contact length at the shoulder portion is shortened, and wear is likely to occur at the crown portion, so that uneven wear resistance is decreased. Due to this, even if the tire can be tuned so as to be able to generate a higher cornering force, the tire cannot sufficiently exhibit its function. Related technologies are also known from US 2019/315160 A1, US 2021/316572 A1, JP 2018 069783 A, and US 2022/194133 A1.

The present invention has been made in view of such circumstances. An object of the present invention is to provide a tire that can achieve improvement of cornering performance. In another aspect, an object of the present invention is to provide a tire that can achieve improvement of cornering performance while maintaining good uneven wear resistance.

### SUMMARY OF THE INVENTION

The present invention is set out in the appended claims. A tire according to the present invention is defined in claim 1.

In another aspect, a tire according to the present invention is defined in claim 7. Preferred embodiments of the tires according to the present invention are defined in the dependent claims.

According to the present invention, a tire that can achieve improvement of cornering performance is obtained. In another aspect, according to the present invention, a tire that can achieve improvement of cornering performance while maintaining good uneven wear resistance is obtained.

### BRIEF DESCRIPTION OF THE DRAWINGS

FIG. 1 is a cross-sectional view showing a part of a tire according to an embodiment of the present invention;
FIG. 2 is a cross-sectional view illustrating a contour line of a tread surface;
FIG. 3 is a schematic diagram showing a ground-contact surface shape of the tire;
FIG. 4 is a cross-sectional view showing a part of a tire according to an embodiment of the present invention;
FIG. 5 is a cross-sectional view illustrating a contour line of a tread surface; and
FIG. 6 is a schematic diagram showing a ground-contact surface shape of the tire.

### DETAILED DESCRIPTION

Hereinafter, the present invention will be described in detail based on preferred embodiments with appropriate reference to the drawings.

A tire of the present invention is fitted on a rim. The interior of the tire is filled with air to adjust the internal pressure of the tire. In the present disclosure, the tire fitted on the rim is a tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

A state where the tire is fitted on the standardized rim, the internal pressure of the tire is adjusted to a pressure equal to 92% of the standardized internal pressure, and no load is applied to the tire is referred to as standard state.

A state where the tire is fitted on the standardized rim, the internal pressure of the tire is adjusted to a pressure equal to 5% of the standardized internal pressure, and no load is applied to the tire is referred to as reference state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cross-section (hereinafter, reference cut plane) of the tire obtained by cutting the tire along a plane including a rotation axis. In this measurement, the distance between right and left beads is set so as to be equal to the distance between the beads in the tire that is fitted on the standardized rim. A component, of the tire, which cannot be confirmed in a state where the tire is fitted on the standardized rim is confirmed in the above-described reference cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are standardized internal pressures.

The standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, the "nominal cross-sectional width" and the "nominal aspect ratio" are the "nominal cross-sectional width" and the "nominal aspect ratio" included in "tyre designation" specified in JIS D4202 "Automobile tyres - Designation and dimensions".

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof. A center portion of the tread portion is also referred to as crown portion. A portion at each end of the tread portion is also referred to as shoulder portion. A boundary portion between the tread portion and each sidewall portion is also referred to as buttress.

In the present invention, a loss tangent (tanδ) of a component formed from a crosslinked rubber, from among the components included in the tire, is measured according to the standards of JIS K6394. The measurement conditions are as follows.
Initial strain = 10%
Dynamic strain = ±1%
Frequency = 10 Hz
Mode = stretch mode
Temperature = 30°C

In this measurement, a test piece (a length of 20 mm × a width of 4 mm × a thickness of 1 mm) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the loss tangent is represented as a loss tangent at 30°C.

In the present invention, groove portions of a tread surface are referred to as sea surfaces, and the portions other than the grooves are referred to as land surfaces. A land/sea ratio means the ratio of the total area of the land surfaces to the total area of the tread surface including the sea surfaces. The land/sea ratio is obtained on the basis of a development of the tread surface. The land/sea ratio of a tire for use in sport driving on a circuit or the like is set to be not less than 65%.

### [Outline of First Embodiment of Present Invention]

### [Configuration 1]

A tire according to an aspect of the present invention is defined in claim 1.

By forming the tire as defined in claim 1, in the tire, a flat tread surface is formed, and generation of a force in a direction opposite to a cornering direction is effectively suppressed at a ground-contact surface formed when the tread surface comes into contact with a road surface. In the tire, the flat tread surface can effectively contribute to generation of a cornering force. The tire can generate a larger cornering force. The tire can contribute to improvement of cornering performance.

### [Configuration 2]

Preferably, the tire is formed as defined in claim 2.

By forming the tire as defined in claim 2, in the tire, a flatter tread surface is formed, and generation of a force in a direction opposite to a cornering direction is more effectively suppressed at the ground-contact surface. The tire can generate a larger cornering force.

### [Configuration 3]

Preferably, the tire is formed as defined in claim 3.

By forming the tire as defined in claim 3, in the tire, a flatter tread surface is formed, and generation of a force in a direction opposite to a cornering direction is more effectively suppressed at the ground-contact surface. The tire can generate a larger cornering force.

### [Configuration 4]

Preferably, the tire may be formed as defined in claim 4, a ratio of the equator ground-contact length measured along the equator plane to a reference ground-contact length at a position corresponding to a width of 80% of the ground-contact width of the ground-contact surface, on the ground-contact surface, is a shape index F80, and the shape index F80 is not less than 1.25 and not greater than 1.45.

By forming the tire as defined in claim 4, in the tire, the wear energy in the ground-contact surface is made uniform, so that occurrence of uneven wear is suppressed. With the tire, a cornering force is effectively increased while good uneven wear resistance is maintained.

### [Configuration 5]

Preferably, the tire may be formed as defined in claim 6, the tire has a nominal cross-sectional width of 215 mm or more, and the tire has a nominal aspect ratio of 55% or less.

By forming the tire as defined in claim6, in the tire, the flat tread surface can effectively contribute to generation of a cornering force. The tire can generate a larger cornering force. The tire can contribute to improvement of cornering performance.

### [Details of First Embodiment of Present Invention]

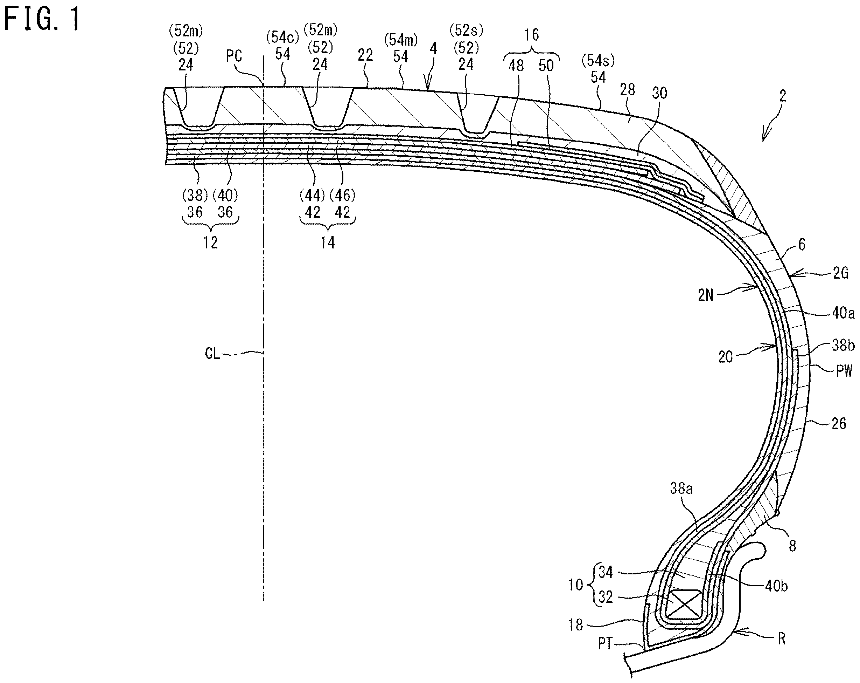

FIG. 1 shows a part of a tire 2 according to a first embodiment of the present invention. The tire 2 is a pneumatic tire for a passenger car.

FIG. 1 shows a part of a cross-section (hereinafter, meridian cross-section) of the tire 2 taken along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

In FIG. 1, the tire 2 is fitted on a rim R (standardized rim). The interior of the tire 2 is filled with air to adjust the internal pressure of the tire 2.

In FIG. 1, a position indicated by reference character PC is the point of intersection of an outer surface 2G (specifically, a tread surface described later) of the tire 2 and the equator plane CL. The point of intersection PC is the equator of the tire 2. In the case where a groove is located on the equator plane CL, the equator PC is specified on the basis of a virtual outer surface obtained on the assumption that no groove is provided thereon. The equator PC is also a radially outer end of the tire 2.

In FIG. 1, a position indicated by reference character PW is an axially outer end (hereinafter, outer end PW) of the tire 2. In the case where decorations such as patterns and letters are present on the outer surface 2G, the outer end PW is specified on the basis of a virtual outer surface obtained on the assumption that the decorations are not present thereon.

The distance in the axial direction from a first outer end PW to a second outer end PW, obtained in the standardized state, is the cross-sectional width (see JATMA or the like) of the tire 2.

Each outer end PW is also referred to as maximum width position. The maximum width position is a position at which the tire 2 has a maximum width. The maximum width obtained in the standardized state is the above-described cross-sectional width.

In FIG. 1, a position indicated by reference character PT is a toe of the tire 2. The toe PT is the boundary between the outer surface 2G and an inner surface 2N of the tire 2.

The tire 2 includes a tread 4, a pair of sidewalls 6, a pair of clinches 8, a pair of beads 10, a carcass 12, a belt 14, a band 16, a pair of chafers 18, and an inner liner 20.

The tread 4 is formed from a crosslinked rubber. The tread 4 comes into contact with a road surface at a tread surface 22 thereof. The tread 4 has the tread surface 22 which comes into contact with a road surface. Grooves 24 are formed on the tread 4. The tread 4 is located radially outward of the carcass 12.

The tread surface 22 is a part of the outer surface 2G of the tire 2. Side surfaces 26 are connected to the tread surface 22. The outer surface 2G of the tire 2 includes the tread surface 22 and a pair of the side surfaces 26.

The tread surface 22 has the equator PC. Each side surface 26 has the maximum width position PW. The outer surface 2G includes the equator PC and the maximum width positions PW.

The tread 4 of the tire 2 includes a cap portion 28 and a base portion 30. The cap portion 28 includes the tread surface 22. The cap portion 28 is formed from a crosslinked rubber for which wear resistance and grip performance are taken into consideration. The base portion 30 is located radially inward of the cap portion 28. The entirety of the base portion 30 is covered with the cap portion 28. The base portion 30 is formed from a crosslinked rubber that has low heat generation properties. A component between the cap portion 28 and the sidewall 6 is a wing which is not designated by a reference character. The cap portion 28 and the sidewall 6 are joined to each other via the wing.

In the tire 2, a loss tangent Ltc at 30°C of the cap portion 28 is preferably not less than 0.25. The cap portion 28 can contribute to improvement of grip performance. In particular, in sport driving on a circuit or the like, the cap portion 28 can effectively contribute to increasing a cornering force. In this respect, it is more preferable if the loss tangent Ltc is higher, and thus a preferable upper limit thereof is not set.

In the tire 2, a loss tangent Ltb at 30°C of the base portion 30 is preferably not greater than 0.11. The base portion 30 contributes to reduction of rolling resistance. In this respect, it is more preferable if the loss tangent Ltb is lower, and thus a preferable lower limit thereof is not set.

Each sidewall 6 is connected to the tread 4. Each sidewall 6 is located radially inward of the tread 4. The sidewall 6 is located axially outward of the carcass 12. The sidewall 6 is formed from a crosslinked rubber for which cut resistance is taken into consideration. The sidewall 6 forms a part of the side surface 26.

Each clinch 8 is located radially inward of the sidewall 6. The clinch 8 comes into contact with the rim R. The clinch 8 is formed from a crosslinked rubber for which abrasion resistance is taken into consideration. The clinch 8 forms a part of a bead portion.

Each bead 10 is located axially inward of the clinch 8. The bead 10 is located radially inward of the sidewall 6.

The bead 10 includes a core 32 and an apex 34. The core 32 extends in the circumferential direction. The core 32 includes a bead wire made of steel, which is not shown. The apex 34 is located radially outward of the core 32. The apex 34 is tapered outward in the radial direction. The apex 34 is formed from a crosslinked rubber that has high stiffness.

The carcass 12 is located inward of the tread 4, the pair of sidewalls 6, and the pair of clinches 8. The carcass 12 extends on and between the pair of beads 10, that is, on and between a first bead 10 and a second bead 10. The carcass 12 includes at least one carcass ply 36.

The carcass 12 of the tire 2 shown in FIG. 1 includes two carcass plies 36. Each carcass ply 36 includes a large number of carcass cords aligned with each other, which are not shown. These carcass cords intersect the equator plane CL. The carcass 12 of the tire 2 has a radial structure.

Of the two carcass plies 36, the carcass ply 36 located radially inward on the inner side of the tread 4 is a first carcass ply 38. The carcass ply 36 located radially outward of the first carcass ply 38 on the inner side of the tread 4 is a second carcass ply 40.

The first carcass ply 38 includes a first ply body 38a and a pair of first turned-up portions 38b. The first ply body 38a extends between the pair of beads 10. Each first turned-up portion 38b is connected to the first ply body 38a and turned up around the bead 10 from the inner side toward the outer side in the axial direction.

The second carcass ply 40 includes a second ply body 40a and a pair of second turned-up portions 40b. The second ply body 40a extends between the pair of beads 10. Each second turned-up portion 40b is connected to the second ply body 40a and turned up around the bead 10 from the inner side toward the outer side in the axial direction.

In the tire 2, an end of the first turned-up portion 38b is located radially outward of the maximum width position PW. An end of the second turned-up portion 40b is located radially inward of the maximum width position PW. The end of the second turned-up portion 40b is located between an outer end of the apex 34 and the core 32 in the radial direction.

The second turned-up portion 40b is located axially inward of the first turned-up portion 38b. The end of the second turned-up portion 40b is interposed between the apex 34 and the first turned-up portion 38b.

The carcass 12 shown in FIG. 1 has a high turned-up (HTU) structure. In the tire 2, the structure of the carcass 12 is not particularly limited. The structure of the carcass 12 may be an ultra-high turned-up (U-HTU) structure, or may be a low turned-up (LTU) structure. The structure of the carcass 12 is determined as appropriate according to the specifications of the tire 2.

In the tire 2, the carcass cords are covered with a topping rubber (hereinafter, carcass cord covering layer). Examples of an elastomer composition that can be used for the carcass cord covering layer include a rubber composition and a thermoplastic elastomer composition.

In the case where the elastomer composition is a rubber composition, examples of the rubber component include isoprene-based rubbers, butadiene-based rubbers, styrene-butadiene rubber, nitrile rubber, and isobutylene-isoprene-rubber. Among them, from the viewpoint that the adhesiveness with the cords is good, isoprene-based rubbers are preferably used. In the case where the elastomer composition is a thermoplastic elastomer composition, examples of the elastomer component include thermoplastic polyurethanes, and block copolymers such as styrene-butadiene block copolymers and styrene-ethylene-butylene-styrene block copolymers.

The components of the elastomer composition other than the rubber component and the elastomer component are not particularly limited, and the elastomer composition may contain 40 to 70 of parts by mass of a filler such as inorganic fillers including silica, carbon black, calcium carbonate, talc, alumina, clay, aluminum hydroxide, aluminum oxide, mica, etc., bio-char, and a hardly dispersible filler, 1 to 10 parts by mass of a plasticizer such as oils, resins, and liquid polymers, 1 to 4 parts by mass of an anti-aging agent, 0.5 to 2.0 parts by mass of stearic acid, 4 to 10 parts by mass of zinc oxide, 0.5 to 4.0 parts by mass of a processing tablet such as carboxylic acid metal salts, 1.0 to 5.0 parts by mass of a thermosetting resin, 3 to 8 parts by mass of sulfur, and 0.5 to 3.0 parts by mass of a vulcanization accelerator. As used herein, parts by mass refers to parts by mass per 100 parts by mass of the rubber component or the elastomer component.

From the viewpoint of life cycle assessment, natural rubber, rice husk-derived silica, a lignin-derived filler, an anti-aging agent, a plasticizer obtained by refining waste cooking oil or the like, etc., may also be used for the carcass cord covering layer described above.

In the tire 2, organic fiber cords formed from an organic fiber are used as the carcass cords. Examples of the organic fiber include polyesters, polyamides, and cellulose. These fibers may be synthetic fibers, or may be biomass-derived fibers. In addition, from the viewpoint of life cycle assessment, preferably, these fibers are derived from recycled or reclaimed materials. Also, these fibers may be formed from a single component of synthetic fibers, biomass fibers, or recycled/reclaimed fibers, and any of a hybrid cord obtained by twisting these fibers together, a cord obtained using a multifilament obtained by combining filaments of the respective fibers, and a cord having a chemical structure in which the respective components are chemically bonded may be used.

Examples of polyester cords include polyethylene terephthalate (PET) cords, polyethylene naphthalate (PEN) cords, and polyethylene furanoate (PEF) cords. From the viewpoint of having excellent air permeation resistance and easily maintaining the air pressure inside the tire as compared to other polyester cords, PEF cords may be used. In addition, a hybrid cord including a cord that is formed from another organic fiber such as polyamide fibers and that replaces a part of a polyester cord may be used.

In the case where the polyester cords are biomass-derived polyester cords, biomass PET cords using biomass-derived terephthalic acid or ethylene glycol, biomass PEF cords using biomass-derived furandicarboxylic acid, etc., can be suitably used.

The biomass polyester cords can be obtained from biomass terephthalic acid, biomass ethylene glycol, etc., which are converted from bioethanol, furfurals, carenes, cymenes, terpenes, etc., converted from compounds derived from various plants and animals, or directly produced by fermentation from microorganisms, etc.

Examples of polyamide cords include aliphatic polyamides, semi-aromatic polyamides, and fully aromatic polyamides.

Aliphatic polyamides are polyamides each having a skeleton in which straight carbon chains are linked by amide bonds, and examples of aliphatic polyamides include nylon 4 (PA4), nylon 410 (PA410), nylon 6 (PA6), nylon 66 (PA66), nylon 610 (PA610), nylon 1010 (PA1010), nylon 1012 (PA1012), and nylon 11 (PA11). Among them, from the viewpoint of being easily obtained from partially or completely biomass-derived materials, nylon 4, nylon 410, nylon 610, nylon 10, nylon 1010, nylon 11, etc., are exemplified.

As nylon 6 and nylon 66, nylons obtained by ring-opening polymerization of caprolactam derived from conventional chemical synthesis, and nylons obtained by condensation polymerization of hexamethylenediamine and adipic acid may be used, and nylon 6 or nylon 66 obtained using bio-caprolactam, bio-adipic acid, and bio-hexamethylenediamine produced from bio-derived cyclohexane as a starting raw material may also be used. In addition, the above-described bio-raw materials may also be obtained from sugars such as glucose. These nylons 6 and nylons 66 are considered to have the same strength as those conventionally used.

Typical examples of nylon 4 include, but are not limited to, nylons made from 2-pyrrolidone that is obtained after conversion of biofermentation-derived glutamic acid to γ-aminobutyric acid. Nylon 4 is characterized by good thermal and mechanical stability and easy polymer structure design, and thus contributes to improvement of tire performance and strength, so that it is possible to suitably use nylon 4.

Nylon 410, nylon 610, nylon 1010, nylon 1012, nylon 11, etc., can be obtained using ricinoleic acid obtained from castor oil (castor bean), etc., as raw materials. Specifically, nylon 410, nylon 610, and nylon 1010 can be obtained by condensation polymerization of sebacic acid and dodecanedioic acid obtained from castor oil with any diamine compound, and nylon 11 can be obtained by condensation polymerization of 11-aminoundecanoic acid obtained from castor oil.

Semi-aromatic polyamides are polyamides each having an aromatic ring structure at a part of a molecular chain thereof, and examples of semi-aromatic polyamides include nylon 4T (PA4T), nylon 6T (PA6T), and nylon 10T (PA10T).

Nylon 4T, nylon 6T, and nylon 10T can each be obtained by condensation polymerization of terephthalic acid as a dicarboxylic acid with a diamine compound having any number of carbon atoms. In this case, these nylon materials can also be obtained using the above-described biomass-derived terephthalic acid. These nylons each have a rigid cyclic structure in the molecular chain and thus are excellent in terms of heat resistance, etc.

Examples of the above-described aliphatic and semi-aromatic polyamides include polyamides 5X obtained by polymerization of lysine-derived 1,5-pentanediamine with dicarboxylic acids (X is the number of carbon atoms derived from the dicarboxylic acid, and is an integer or T representing terephthalic acid).

Fully aromatic polyamides are polyamides each having a skeleton in which aromatic rings are linked by amide bonds, and examples of fully aromatic polyamides include polyparaphenylene terephthalamide. Like the above-described aliphatic and semi-aromatic polyamides, fully aromatic polyamides may also be obtained by bonding biomass-derived terephthalic acid with phenylenediamine.

Examples of cellulose fibers include rayon, polynosic, cupra, acetate, lyocell, modal, etc., produced from plant materials such as wood pulp. The raw materials of these cellulose-based fibers are carbon-neutral materials, and these cellulose-based fibers are also biodegradable and have excellent environmental performance such as not emitting toxic gases when incinerated after use, so that these cellulose-based fibers are preferable. Among them, rayon, polynosic, and lyocell are particularly preferable due to their balance of process efficiency, environmental friendliness, and mechanical strength.

The above cords may also be recycled cords obtained by re-spinning materials recovered and refined from used products such as beverage bottles and clothing, regardless of whether the cords are synthetized or derived from biomass.

The above cords may each be formed by twisting one or more filaments together. For example, a cord that is obtained by combining two multifilaments of 1100 decitex (in other words, 1100/2 decitex), first twisting the multifilaments 48 times/10 cm, then combining these two first-twisted cords, and secondly twisting these cords the same number of times in a direction opposite to or the same direction as the first twisting, a cord that is obtained by combining two multifilaments of 1670 decitex (in other words, 1670/2 decitex), twisting the multifilaments 40 times/10 cm, and then combining and secondly twisting these two first-twisted cords, etc., can be used.

As described above, the carcass cords are covered with the carcass cord covering layer. From the viewpoint of ensuring good adhesiveness with the carcass cord covering layer, the carcass cords are preferably treated by applying an adhesive layer thereto in advance. As the adhesive layer, a known adhesive layer can be used, and, for example, in addition to an adhesive layer obtained by treatment with a resorcinol formalin rubber latex (RFL), an adhesive layer obtained by RFL treatment after epoxy treatment with an adhesive composition containing a sorbitol polyglycidyl ether and a blocked isocyanate, or the like, an adhesive layer obtained by treatment with an adhesive composition containing a halohydrin compound, a blocked isocyanate compound, and a rubber latex, etc., can also be used.

Examples of the resorcinol formalin rubber latex (RFL) include an adhesive composition containing natural rubber and/or a synthetic rubber latex and a co-condensate of phenol-formaldehyde and resorcinol as described, for example, in Japanese Laid-Open Patent Publication No. S48-11335. Such an adhesive composition can be produced, for example, by a production method including: a step of condensing phenol and formaldehyde in the presence of an alkaline catalyst; a step of copolymerizing an aqueous phenol-formaldehyde resin solution and resorcinol; and a step of mixing the produced phenol-formaldehyde-resorcinol resin solution and latex rubber.

Examples of the synthetic rubber latex include a butadiene polymer latex, a styrene/butadiene copolymer latex, an isoprene polymer latex, a butadiene/acrylonitrile copolymer latex, a butadiene/vinyl pyridine polymer latex, and a butadiene/vinyl pyridine/styrene copolymer latex.

The above adhesive layer composed of the resorcinol formalin rubber latex (RFL) can be formed by applying an RFL adhesive (e.g., a method of dipping the above cord in an RFL solution, etc.). The RFL adhesive is usually adhered after a fiber cord is obtained by twisting, but may be adhered before or during the twisting.

The composition of the RFL adhesive is not particularly limited, and may be selected as appropriate, but among others, a composition containing 0.1 to 10% by mass of resorcinol, 0.1 to 10% by mass of formalin, and 1 to 28% by mass of a latex is preferable, and a composition containing 0.5 to 3% by mass of resorcinol, 0.5 to 3% by mass of formalin, and 10 to 25% by mass of a latex is more preferable.

Examples of a heating method in heat treatment include a method in which a cord having an RFL adhesive composition adhered thereto is dried at 100 to 250°C for 1 to 5 minutes and then heat treatment is further performed thereon at 150 to 250°C for 1 to 5 minutes. The conditions of the heat treatment after the drying are preferably 180 to 240°C for 1 to 2 minutes.

The above adhesive composition containing the sorbitol polyglycidyl ether and the blocked isocyanate is not particularly limited as long as this adhesive composition is a composition containing a sorbitol polyglycidyl ether and a blocked isocyanate. Among others, a composition containing an epoxy compound that is a sorbitol polyglycidyl ether and that has a chlorine content of 9.6% by mass or less, and a blocked isocyanate is preferable.

Examples of the sorbitol polyglycidyl ether include sorbitol diglycidyl ether, sorbitol triglycidyl ether, sorbitol tetraglycidyl ether, sorbitol pentaglycidyl ether, sorbitol hexaglycidyl ether, and mixtures thereof, and sorbitol monoglycidyl ether may be included. The sorbitol polyglycidyl ether has a large number of epoxy groups in one molecule thereof and can form a highly crosslinked structure.

The chlorine content of the sorbitol polyglycidyl ether is preferably not greater than 9.6% by mass, more preferably not greater than 9.5% by mass, further preferably not greater than 9.4% by mass, and particularly preferably not greater than 9.3% by mass. The lower limit of the chlorine content is not particularly limited, and is, for example, not less than 1% by mass. In the present disclosure, the chlorine content of the sorbitol polyglycidyl ether can be obtained by the method described in JIS K 7243-3, etc.

The chlorine content of the sorbitol polyglycidyl ether can be reduced by reducing the amount of epichlorohydrin used in the synthesis of the epoxy compound.

Blocked isocyanates are compounds that are produced by the reaction of an isocyanate compound and a blocking agent and that are temporarily inactivated by a group derived from the blocking agent, and when heated at a predetermined temperature, the group derived from the blocking agent dissociates to form an isocyanate group.

Examples of the isocyanate compound include a compound having two or more isocyanate groups in the molecule thereof.

As diisocyanates having two isocyanate groups, for example, hexamethylene diisocyanate, diphenylmethane diisocyanate, xylylene diisocyanate, isophorone diisocyanate, phenylene diisocyanate, tolylene diisocyanate, trimethylhexamethylene diisocyanate, metaphenylene diisocyanate, naphthalene diisocyanate, diphenyl ether diisocyanate, diphenylpropane diisocyanate, biphenyl diisocyanate, isomers, alkyl-substituted compounds, halides, and products thereof hydrogenated to a benzene ring, etc., can be used. In addition, triisocyanates having three isocyanate groups, tetraisocyanates having four isocyanate groups, polymethylene polyphenyl polyisocyanate, etc., can be used. One of these isocyanate compounds may be used alone, or two or more of these isocyanate compounds may be used in combination. Among them, tolylene diisocyanate, metaphenylene diisocyanate, diphenylmethane diisocyanate, hexamethylene diisocyanate, and polymethylene polyphenyl polyisocyanate are preferable.

Examples of the blocking agent include: lactam-based blocking agents such as ε-caprolactam, δ-valerolactam, γ-butyrolactam, and β-propiolactam; phenol-based blocking agents such as phenol, cresol, resorcinol, and xylenol; alcohol-based blocking agents such as methanol, ethanol, n-propyl alcohol, isopropyl alcohol, n-butyl alcohol, isobutyl alcohol, tert-butyl alcohol, ethylene glycol monoethyl ether, ethylene glycol monobutyl ether, diethylene glycol monoethyl ether, propylene glycol monomethyl ether, and benzyl alcohol; oxime-based blocking agents such as formamidoxime, acetaldoxime, acetoxime, methyl ethyl ketoxime, diacetyl monoxime, benzophenone oxime, and cyclohexanone oxime; active methylene-based blocking agents such as dimethyl malonate, diethyl malonate, ethyl acetoacetate, methyl acetoacetate, and acetylacetone; etc. Among them, lactam-based, phenol-based, and oxime-based blocking agents are preferable.

The amount of the blocked isocyanate in the above adhesive composition containing the sorbitol polyglycidyl ether and the blocked isocyanate, per 100 parts by mass of the sorbitol polyglycidyl ether, is preferably not less than 50 parts by mass and more preferably not less than 200 parts by mass. The upper limit of this amount is preferably not greater than 500 parts by mass and more preferably not greater than 400 parts by mass.

The above adhesive composition containing the sorbitol polyglycidyl ether and the blocked isocyanate may contain optional components described below if necessary. Examples of such components include an epoxy compound other than the sorbitol polyglycidyl ether, a resin copolymerizable with the sorbitol polyglycidyl ether, a curing agent other than the blocked isocyanate, an organic thickening agent, an antioxidant, a light stabilizer, an adhesion improver, a reinforcing agent, a softener, a coloring agent, a leveling agent, a flame retardant, and an antistatic agent.

Examples of the epoxy compound other than the sorbitol polyglycidyl ether include: glycidyl ethers such as ethylene glycol glycidyl ether, glycerol polyglycidyl ether, diglycerol polyglycidyl ether, polyglycerol polyglycidyl ether, bisphenol A diglycidyl ether, bisphenol S diglycidyl ether, novolac glycidyl ether, and brominated bisphenol A diglycidyl ether; glycidyl esters such as hexahydrophthalic acid glycidyl ester and dimeric acid glycidyl ester; glycidyl amines such as triglycidyl isocyanurate, glycidyl hydantoin, tetraglycidyl diaminodiphenylmethane, triglycidyl para-aminophenol, triglycidyl meta-aminophenol, diglycidyl aniline, diglycidyl toluidine, tetraglycidyl meta-xylenediamine, diglycidyl tribromoaniline, and tetraglycidyl bisaminomethylcyclohexane; alicyclic or aliphatic epoxides such as 3,4-epoxy cyclohexyl methylcarboxylate, epoxidized polybutadiene, and epoxidized soybean oil; etc.

Examples of the treatment with the above adhesive composition containing the sorbitol polyglycidyl ether and the blocked isocyanate include treatment performed for adhering various components included in the RFL to the cord, and treatment including subsequent heat treatment if necessary.

As the method for adhesion, for example, any methods such as application using a roller, spraying from a nozzle, and immersion in a bath solution (adhesive composition) can be used. From the viewpoint of uniform adhesion and removal of excess adhesive, adhesion by immersion is preferable.

In order to adjust the amount of adhesion to the cord, means such as squeezing by pressure rollers, scraping off by a scraper or the like, blowing off by air, suction, and beating by a beater may be further employed.

The amount of adhesion to the cord is preferably not less than 1.0% by mass and more preferably not less than 1.5% by mass, and is preferably not greater than 3.0% by mass and more preferably not greater than 2.5% by mass.

The amount of adhesion to the cord is the amount of a solid component in the RFL adhesive adhered per 100 parts by mass of the cord.

The total solid component concentration of the above adhesive composition containing the sorbitol polyglycidyl ether and the blocked isocyanate is preferably not less than 0.9% by mass and more preferably not less than 14% by mass, and is preferably not greater than 29% by mass and more preferably not greater than 23% by mass.

In addition to resorcinol, formalin, and a rubber latex, a vulcanization adjuster, zinc oxide, an antioxidant, a defoamer, etc., may be added to the above adhesive composition containing the sorbitol polyglycidyl ether and the blocked isocyanate.

Examples of a heating method in heat treatment include a method in which a reinforcing material having an RFL adhesive composition adhered thereto is dried at 100 to 250°C for 1 to 5 minutes and then heat treatment is further performed thereon at 150 to 250°C for 1 to 5 minutes. The conditions of the heat treatment after the drying are preferably 180 to 240°C for 1 to 2 minutes.

The above adhesive composition containing the halohydrin compound, the blocked isocyanate compound, and the rubber latex is not particularly limited as long as the adhesive composition contains these components, but an adhesive composition containing the halohydrin compound, the blocked isocyanate compound, and the rubber latex and not containing resorcinol and formaldehyde is preferable.

Examples of the halohydrin compound include compounds obtained by reacting polyol compounds with epihalohydrin compounds (halohydrin ethers).

Polyol compounds are compounds each having two or more hydroxyl groups in the molecule thereof, and examples of polyol compounds include glycols such as ethylene glycol, propylene glycol, polyethylene glycol, and polypropylene glycol, hydroxyl acids such as erythritol, xylitol, sorbitol, and tartaric acid, glyceric acid, glycerin, diglycerin, polyglycerin, trimethylolpropane, trimethylolethane, and pentaerythritol. Examples of epihalohydrin compounds include epichlorohydrin and epibromohydrin.

Examples of the halohydrin compound include fluoroalcohol compounds, chlorohydrin compounds, bromohydrin compounds, and iodohydrin compounds. Among them, halogenated sorbitol and halogenated glycerol are preferable.

The halogen content in 100% by mass of the halohydrin compound is preferably 5.0 to 15.0% by mass, more preferably 7.0 to 13.0% by mass, and further preferably 9.0 to 12.0% by mass.

Examples of the blocked isocyanate compound include the same compounds as the above-described blocked isocyanate. In addition, examples of the rubber latex include the same latexes as the above-described rubber latex.

The above adhesive composition containing the halohydrin compound, the blocked isocyanate compound, and the rubber latex preferably contains 10.0 parts by mass of the halohydrin compound, 10.0 to 30.0 parts by mass of the blocked isocyanate compound, and 80.0 to 240.0 parts by mass of the rubber latex. The adhesive composition does not contain resorcinol and formaldehyde.

The adhesive layer composed of the adhesive composition containing the halohydrin compound, the blocked isocyanate compound, and the rubber latex is formed on the surface of the cord using the adhesive composition. The adhesive layer is formed by, for example, but is not limited to, dipping, brushing, casting, spraying, roll coating, knife coating, etc.

The belt 14 is located radially inward of the tread 4. The belt 14 is stacked on the carcass 12. The above-described equator plane CL intersects the belt 14 at the center of the axial width of the belt 14.

In the tire 2, the axial width of the belt 14 is not less than 70% and not greater than 90% of the cross-sectional width of the tire 2.

The belt 14 includes at least one layer 42. The belt 14 may be composed of a plurality of layers 42 stacked in the radial direction. The belt 14 of the tire 2 includes two layers 42 stacked in the radial direction. The layer 42 located radially outward of the second ply body 40a and stacked on the second ply body 40a is a first layer 44. The layer 42 located radially outward of the first layer 44 and stacked on the first layer 44 is a second layer 46. The belt 14 includes the first layer 44 and the second layer 46.

As shown in FIG. 1, an end of the second layer 46 is located axially inward of an end of the first layer 44. The second layer 46 is narrower than the first layer 44. The length from the end of the second layer 46 to the end of the first layer 44 is not less than 3 mm and not greater than 10 mm. The above-described axial width of the belt 14 is represented as the axial width of the wider first layer 44.

Each of the first layer 44 and the second layer 46 includes a large number of belt cords aligned with each other, which are not shown. These belt cords are covered with a topping rubber (hereinafter, belt cord covering layer). Each belt cord is tilted relative to the equator plane CL. The belt cord is a steel cord.

In the tire 2, each steel cord included in the belt 14 is preferably composed of an N×M structure in which M cords each obtained by combining N filaments are combined. Here, N and M are each an integer of 1 or more, and each steel cord may be composed of a 1×1 structure in which single-wire steel cords may be aligned. In the case where N is 1, a filament used may be longitudinally reformed. In the case where N is 2 or more, N filaments are preferably twisted with each other. Meanwhile, in the case where M is 2 or more, N filaments combined in advance may be preferably twisted together. From the viewpoint that the belt cord covering layer permeates into the cords to obtain good adhesiveness, some filaments that are reformed as described above are preferably used.

The steel cord may have a monofilament structure in which single-wire cords are aligned, or may have an N×M structure in which a plurality of filaments are twisted together, an N+M structure, an N+M+R structure, which are layer structures, or a multi-twisted structure in which cords each obtained by bundling or twisting together a plurality of filaments are further twisted together (N, M, and R are all integers).

The diameter of each of the filaments is preferably not less than 0.10 mm and not greater than 0.50 mm. In the case where the above M is 2 or more, the diameter of the circumscribed circle of the twisted cord is preferably not less than 0.2 mm and not greater than 1.0 mm. In the case of a 1×1 structure composed of single-wire cords, a cross-sectional shape perpendicular to the longitudinal direction of each cord may be a flattened shape. In the case where the cross-section has a flattened shape, the simple average of the short and long diameters is treated as an outer diameter.

In the belt 14, a plurality of the steel cords are arranged in the width direction thereof. The number of cords arranged in the width direction is not particularly limited, but the product of the number of cords arranged in the width direction per 5 cm and the cross-sectional area of the cord is preferably in the range of 4.5 to 15.0 (mm²/5 cm).

From the viewpoint of adhesiveness, the surfaces of the steel cords may be plated with copper and zinc elements. As another element, an element having an ionization tendency between copper and zinc may be contained, and examples of such an element include cobalt, nickel, tin, antimony, and bismuth.

As described above, in the tire 2, the belt cords are covered with the belt cord covering layer. The belt cords are preferably covered with a belt cord covering layer formed from an elastomer composition. Examples of the elastomer composition that can be used for the belt cord covering layer include a rubber composition and a thermoplastic elastomer composition.

In the case where the elastomer composition is a rubber composition, examples of the rubber component include isoprene-based rubbers, butadiene-based rubbers, styrene-butadiene rubber, nitrile rubber, and isobutylene-isoprene-rubber. Among them, from the viewpoint that the adhesiveness with the steel cords is good, isoprene-based rubbers are preferably used. In the case where the elastomer composition is a thermoplastic elastomer composition, examples of the elastomer component include thermoplastic polyurethanes, and block copolymers such as styrene-butadiene block copolymers and styrene-ethylene-butylene-styrene block copolymers.

The components of the elastomer composition other than the rubber component and the elastomer component are not particularly limited, and the elastomer composition may contain 40 to 70 of parts by mass of a filler such as inorganic fillers including silica, carbon black, calcium carbonate, talc, alumina, clay, aluminum hydroxide, aluminum oxide, mica, etc., bio-char, and a hardly dispersible filler, 1 to 10 parts by mass of a plasticizer such as oils, resins, and liquid polymers, 1 to 4 parts by mass of an anti-aging agent, 0.5 to 2.0 parts by mass of stearic acid, 5 to 12 parts by mass of zinc oxide, 0.5 to 4.0 parts by mass of a processing tablet such as carboxylic acid metal salts, 0.5 to 3.0 parts by mass of an adhesion aid such as cobalt compounds, 1.0 to 5.0 parts by mass of a thermosetting resin, 4 to 8 parts by mass of sulfur, and 0.5 to 3.0 parts by mass of a vulcanization accelerator. As used herein, parts by mass refers to parts by mass per 100 parts by mass of the rubber component or the elastomer component.

From the viewpoint of life cycle assessment, natural rubber, rice husk-derived silica, a lignin-derived filler, an anti-aging agent, a plasticizer obtained by refining waste cooking oil or the like, etc., may also be used for the belt cord covering layer described above.

The band 16 is located between the tread 4 and the belt 14 in the radial direction. The band 16 is stacked on the belt 14.

An end of the band 16 is located axially outward of an end of the belt 14. The length from the end of the belt 14 to the end of the band 16 is not less than 3 mm and not greater than 7 mm.

The band 16 includes a helically wound band cord which is not shown. The band cord extends substantially in the circumferential direction. Specifically, an angle of the band cord with respect to the circumferential direction is not greater than 5°. The band 16 has a jointless structure.

The band cord is an organic fiber cord. As the band cord, a cord that is the same as the above-described carcass cords is used.

The band cord is covered with a topping rubber. An elastomer composition and various ingredients that are the same as those for the carcass cord covering layer included in the above-described carcass 12 are used for the topping rubber, that is, a band cord covering layer. From the viewpoint of life cycle assessment, natural rubber, rice husk-derived silica, a lignin-derived filler, an anti-aging agent, a plasticizer obtained by refining waste cooking oil or the like, etc., may also be used for this covering layer.

The band 16 includes a full band 48 and a pair of edge bands 50.

The full band 48 is stacked on the belt 14. The full band 48 covers the entirety of the belt 14. Each end of the full band 48 is located axially outward of the end of the belt 14.

The pair of edge bands 50 are arranged so as to be spaced apart from each other with the equator plane CL therebetween. Each edge band 50 is stacked on the full band 48. The edge band 50 covers a portion at the end of the full band 48.

The band 16 may be composed of a full band 48. The band 16 may be composed of two full bands 48 stacked in the radial direction. The band 16 may be composed of a pair of edge bands 50.

Each chafer 18 is located radially inward of the bead 10. The chafer 18 comes into contact with the rim R. The chafer 18 of the tire 2 includes a fabric and a rubber with which the fabric is impregnated.

The inner liner 20 is located inward of the carcass 12. The inner liner 20 forms the inner surface 2N of the tire 2. The inner liner 20 is formed from a crosslinked rubber that has an excellent air blocking property. The inner liner 20 maintains the internal pressure of the tire 2.

As described above, the grooves 24 are formed on the tread 4. The grooves 24 include a groove extending in the circumferential direction (hereinafter, circumferential groove 52).

In the tire 2, at least three circumferential grooves 52 are formed on the tread 4. On the tread 4 shown in FIG. 1, four circumferential grooves 52 are formed. Accordingly, five land portions 54 are formed.

Among the four circumferential grooves 52, the circumferential groove 52 located on each outer side in the axial direction is a shoulder circumferential groove 52s. The circumferential groove 52 located axially inward of the shoulder circumferential groove 52s is a middle circumferential groove 52m.

Among the five land portions 54, the land portion 54 located on each outer side in the axial direction is a shoulder land portion 54s. The land portion 54 located axially inward of the shoulder land portion 54s is a middle land portion 54m. The land portion 54 located axially inward of the middle land portion 54m is a center land portion 54c.

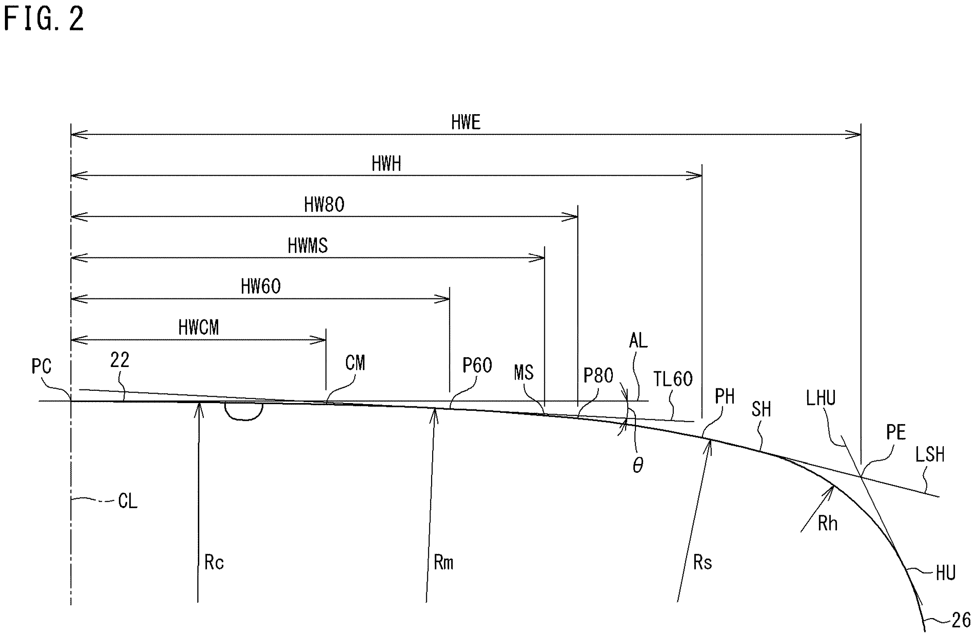

FIG. 2 shows a part of a contour line of the outer surface 2G in the meridian cross-section of the tire 2. The contour line is represented by a virtual outer surface obtained on the assumption that grooves and decorations such as patterns and letters are not present.

Although not described in detail, in the present invention, the contour line of the outer surface 2G is obtained by measuring the outer surface shape of the tire 2 in the reference state, for example, using a displacement sensor. The contour line of the outer surface 2G may be specified on the basis of the shape of a cavity surface of a mold (not shown) for shaping the outer surface 2G of the tire 2.

In the meridian cross-section, a contour line of the tread surface 22 includes a plurality of arcs aligned in the axial direction. This contour line is composed of the plurality of arcs aligned in the axial direction.

Among the plurality of arcs, the arc located on the outermost side in the axial direction is a shoulder arc. In FIG. 2, an arrow indicated by reference character Rh represents the radius of the shoulder arc. The shoulder arc has the smallest radius Rh among the plurality of arcs included in the contour line of the tread surface 22.

The contour line of the tread surface 22 includes a pair of shoulder arcs. Contour lines of the side surfaces 26 are connected to the respective shoulder arcs.

In FIG. 2, reference character HU indicates an outer end of the shoulder arc. The outer end HU is the boundary between the shoulder arc and the contour line of the side surface 26. Reference character SH indicates an inner end of the shoulder arc. The inner end SH is the boundary between the shoulder arc and an arc (third arc described later) located axially inward of the shoulder arc.

The contour line of the tread surface 22 includes at least three arcs between the pair of shoulder arcs, that is, between a first shoulder arc and a second shoulder arc (not shown). In the tread surface 22 of the tire 2, the contour line thereof includes five arcs between the first shoulder arc and the second shoulder arc.

Among the five arcs, the arc located at the center in the axial direction is a first arc. In FIG. 2, an arrow indicated by reference character Rc represents the radius of the first arc. The first arc passes through the equator PC. Although not shown, the center of the first arc is located on the equator plane CL.

The arc located adjacent to the first arc is a second arc. The second arc is located axially outward of the first arc, and is connected to the first arc. In FIG. 2, an arrow indicated by reference character Rm represents the radius of the second arc. A position indicated by reference character CM is the boundary between the first arc and the second arc. In the tire 2, the second arc is tangent to the first arc at the boundary CM.

The arc located adjacent to the second arc is the third arc. The third arc is located axially outward of the second arc, and is connected to the second arc. In FIG. 2, an arrow indicated by reference character Rs represents the radius of the third arc. A position indicated by reference character MS is the boundary between the second arc and the third arc. In the tire 2, the third arc is tangent to the second arc at the boundary MS.

The arc located adjacent to the third arc is the above-described shoulder arc. As described above, the inner end SH of the shoulder arc is the boundary between the third arc and the shoulder arc. In the tire 2, the shoulder arc is tangent to the third arc at the boundary SH.

The contour line of the tread surface 22 includes the first arc, a pair of the second arcs, a pair of the third arcs, and the pair of shoulder arcs. The radius Rm of each second arc is smaller than the radius Rc of the first arc. The radius Rs of each third arc is smaller than the radius Rm of each second arc. The radius Rh of each shoulder arc is smaller than the radius Rs of each third arc.

In FIG. 2, a straight line LSH is a tangent line that is tangent to the shoulder arc at the boundary SH. A straight line LHU is a tangent line that is tangent to the shoulder arc at the boundary HU. Reference character PE represents the point of intersection of the tangent line LSH and the tangent line LHU. In the present invention, the point of intersection PE is a reference end of the tread 4. A length indicated by reference character HWE is the distance in the axial direction from the equator plane CL to the reference end PE. In the present invention, the distance HWE in the axial direction is a reference width of the tread 4. A length that is twice the reference width HWE is the width of the tread 4.

In FIG. 2, a length indicated by reference character HWCM is the distance in the axial direction from the equator plane CL to the boundary CM. A length indicated by reference character HWMS is the distance in the axial direction from the equator plane CL to the boundary MS.

In the tire 2, the ratio (HWCM/HWE) of the distance HWCM in the axial direction to the reference width HWE is preferably not less than 25% and not greater than 35%. The ratio (HWMS/HWE) of the distance HWMS in the axial direction to the reference width HWE is preferably not less than 55% and not greater than 65%.

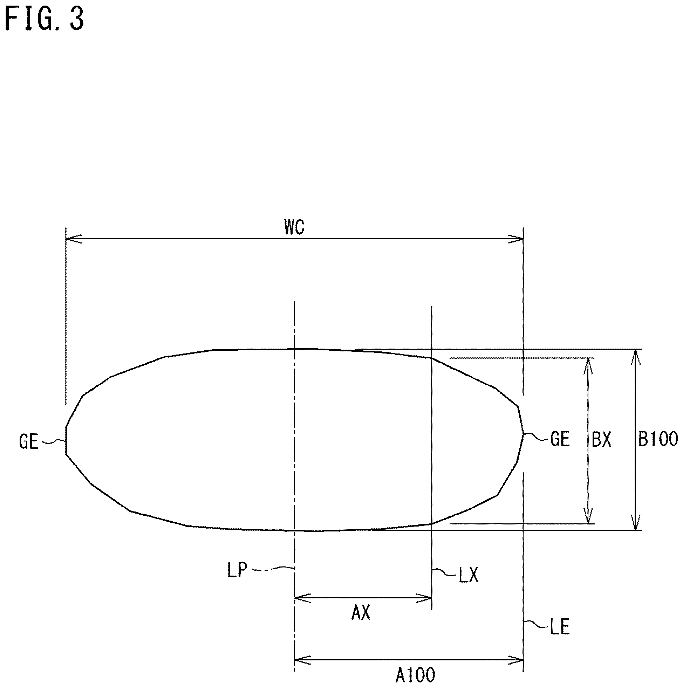

FIG. 3 shows the contour of a ground-contact surface of the tire 2. In FIG. 3, the right-left direction corresponds to the axial direction of the tire 2. The up-down direction corresponds to the circumferential direction of the tire 2.

The contour of the ground-contact surface is obtained as follows, using a tire ground-contact surface shape measuring device (not shown). A load equal to 70% of the standardized load is applied to the tire 2 in the standard state, and the tire 2 is brought into contact with a flat surface. At this time, the tire 2 is placed such that the axial direction thereof is parallel to the flat surface. The camber angle of the tire 2 is set to 0 degrees, and the above-described load is applied to the tire 2 in a direction perpendicular to the flat surface.

Although not described in detail, an image of a ground-contact surface formed when the tire 2 comes into contact with the flat surface is obtained by a known method. The contour of the ground-contact surface is specified on the basis of the obtained ground-contact surface image.

The contour of the ground-contact surface is obtained by tracing the perimeter of the ground-contact surface in the ground-contact surface image. If the perimeter of the ground-contact surface is interrupted by a groove, the contour of the ground-contact surface is traced by connecting the interrupted portion with a straight line.

The ground-contact surface having the contour obtained thus is used as the ground-contact surface of the tire 2 obtained by applying the load equal to 70% of the standardized load to the tire 2 in the standard state and bringing the tire 2 into contact with the flat surface. The shape of the ground-contact surface is analyzed on the basis of the contour of the obtained ground-contact surface.

In FIG. 3, each position indicated by reference character GE is an axially outer end of the ground-contact surface. In the present invention, the axially outer end GE is a ground-contact end. A length indicated by reference character WC is a ground-contact width. The ground-contact width WC is the distance in the axial direction from a first ground-contact end GE to a second ground-contact end GE, and is specified on the ground-contact surface shown in FIG. 3.

In FIG. 3, an alternate long and short dash line LP extending in the up-down direction is a straight line, corresponding to the equator PC of the tire 2, on the ground-contact surface. If it is difficult to specify the equator PC on the ground-contact surface, the center line in the axial direction of the ground-contact width WC is used as the straight line corresponding to the equator PC. A double-headed arrow B100 represents the length of a line of intersection of a plane including the straight line LP and the reference ground-contact surface. In the tire 2, the length B100 of the line of intersection is an equator ground-contact length measured along the equator plane CL on the ground-contact surface.

In FIG. 3, a solid line LE is a straight line that passes through the ground-contact end GE and that is parallel to the straight line LP. A length indicated by reference character A100 is the distance in the axial direction from the straight line LP to the straight line LE. The distance A100 corresponds to half the ground-contact width WC.

A solid line LX is a straight line that is located between the straight line LE and the straight line LP and that is parallel to the straight line LE and the straight line LP. A length indicated by a double-headed arrow AX is the distance in the axial direction from the straight line LP to the straight line LX. A double-headed arrow BX represents the length of a line of intersection of a plane including the straight line LX and the ground-contact surface.

In the present invention, the length BX is a ground-contact length at a predetermined position on the ground-contact surface, and is referred to as reference ground-contact length. The ratio (B100/BX) of the equator ground-contact length B100 is a shape index, and the shape of the ground-contact surface is grasped by this shape index.

In the present invention, the ratio (AX/A100) of the distance AX to the distance A100 is set to 60% or 80%.

In the case where the ratio (AX/A100) is 60%, the length BX means a ground-contact length at a position corresponding to a width of 60% of the ground-contact width WC on the ground-contact surface, and this ground-contact length is represented as a reference ground-contact length B60. A shape index represented as the ratio (B100/B60) of the equator ground-contact length B100 to the reference ground-contact length B60 is a shape index F60.

In the case where the ratio (AX/A100) is 80%, the length BX means a ground-contact length at a position corresponding to a width of 80% of the ground-contact width WC on the ground-contact surface, and this ground-contact length is represented as a reference ground-contact length B80. A shape index represented as the ratio (B100/B80) of the equator ground-contact length B100 to the reference ground-contact length B80 is a shape index F80.

In FIG. 2, a position indicated by reference character PH is a position, on the tread surface 22, corresponding to the ground-contact end GE shown in FIG. 3. In the present invention, the position PH is a reference ground-contact position. As shown in FIG. 2, in the tire 2, a portion, of the tread surface 22, represented by the third arc includes the reference ground-contact position PH.

A length indicated by reference character HWH is the distance in the axial direction from the equator plane CL to the reference ground-contact position PH.

In the tire 2, the ratio (HWH/HWE) of the distance HWH in the axial direction from the equator plane CL to the reference ground-contact position PH to the reference width HWE of the tread 4 is preferably not less than 75% and not greater than 90%.

A position indicated by reference character P60 is a specific position on the tread surface 22. In the present invention, the position P60 is also referred to as tilt confirmation position. A length indicated by reference character HW60 is the distance in the axial direction from the equator plane CL to the tilt confirmation position P60. In the present invention, the ratio (HW60/HWH) of the distance HW60 in the axial direction to the distance HWH in the axial direction is set to 60%. The tilt confirmation position P60 is a position, on the tread surface 22, at which the distance HW60 in the axial direction from the equator plane CL is 60% of the distance HWH in the axial direction from the equator plane CL to the reference ground-contact position PH.

As shown in FIG. 2, in the tire 2, the tilt confirmation position P60 is located between the boundary CM and the boundary MS in the axial direction. In other words, the tilt confirmation position P60 is located on the second arc on the contour line of the tread surface 22.

A position indicated by reference character P80 is a specific position on the tread surface 22. A length indicated by reference character HW80 is the distance in the axial direction from the equator plane CL to the specific position P80. In the present invention, the ratio (HW80/HWH) of the distance HW80 in the axial direction to the distance HWH in the axial direction is set to 80%. The position P80 is a position, on the tread surface 22, at which the distance HW80 in the axial direction from the equator plane CL is 80% of the distance HWH in the axial direction from the equator plane CL to the reference ground-contact position PH.

As shown in FIG. 2, in the tire 2, the position P80 is located axially outward of the boundary MS. In other words, the position P80 is located on the third arc on the contour line of the tread surface 22. In the tire 2, the position P80 may coincide with the boundary MS, or the position P80 may be located axially inward of the boundary MS. In the case where the position P80 is located axially inward of the boundary MS, the position P80 is located on the second arc on the contour line of the tread surface 22.

In FIG. 2, a solid line indicated by reference character AL is a straight line that passes through the equator PC and that extends in the axial direction. A straight line indicated by reference character TL60 is a tangent line that is tangent to the contour line of the tread surface 22 at the tilt confirmation position P60. An angle θ is an angle formed between the straight line AL and the tangent line TL60. In the present invention, the angle θ is an angle of the tangent line TL60, which is tangent to the contour line of the tread surface 22 at the tilt confirmation position P60, with respect to the axial direction in the meridian cross-section of the tire 2.

In sport driving on a circuit or the like, a vehicle is required to be able to corner at a high speed. Therefore, the present inventor has checked the state of generation of a force at a ground-contact surface during cornering at a camber angle of -3 degrees and a slip angle of 2 degrees using a finite element method (FEM) in order to further increase the cornering force generated during cornering, and as a result, the present inventor has found that a force in a direction opposite to the cornering direction is generated at a part of the ground-contact surface in a conventional tire. The force in the direction opposite to the cornering direction reduces the cornering force. Since the cornering force can be further increased if the generation of the force in the direction opposite to the cornering direction is suppressed, the present inventor has reviewed the relationship between the configuration of the contour line of the tread surface and the shape of the ground-contact surface in a meridian cross-section of the tire, and has completed the present invention.

In the tire 2, the angle θ of the tangent line TL60, which is tangent to the contour line of the tread surface 22 at the tilt confirmation position P60, with respect to the axial direction in the meridian cross-section is not less than 2.5 degrees and not greater than 3.5 degrees.

Since the angle θ is not greater than 3.5 degrees, a flatter tread surface 22 is formed. The tread surface 22 effectively comes into contact with a road surface, so that a wider ground-contact surface is formed. A large cornering force is generated with the tire 2.

Since the angle θ is not less than 2.5 degrees, even if the tire 2 is mounted on a vehicle at a negative camber, occurrence of wear and damage at a shoulder portion on the vehicle side is suppressed. The tire 2 can achieve improvement of high-speed durability and uneven wear resistance.

If the angle θ exceeds 3.5 degrees, it is difficult to form a desired flat tread surface. In this case, a cornering force is reduced.

If the angle θ is less than 2.5 degrees, when the tire 2 is mounted on a vehicle at a negative camber, wear and damage are likely to occur at the shoulder portion on the vehicle side, so that sufficient high-speed durability and uneven wear resistance cannot be achieved.

Moreover, the shape index F60 for the ground-contact surface obtained when a load equal to 70% of the standardized load is applied to the tire 2 in the standard state and the tire 2 is brought into contact with a flat surface is not less than 1.00 and not greater than 1.20.

Since the shape index F60 is not less than 1.00, the ground-contact surface is formed in an appropriate shape that is elongated without being narrow around the center thereof. The tread surface 22 can effectively contribute to generation of a cornering force. At the ground-contact surface, a force applied in a direction opposite to a cornering direction is less likely to be generated. A large cornering force is generated with the tire 2. From this viewpoint, the shape index F60 is preferably not less than 1.05.

Since the shape index F60 is not greater than 1.20, the ground-contact surface is effectively inhibited from bulging at the center portion. In this case as well, the ground-contact surface is formed in an appropriate shape that is elongated. At the ground-contact surface, a force applied in a direction opposite to a cornering direction is less likely to be generated. A large cornering force is generated with the tire 2. From this viewpoint, the shape index F60 is preferably not greater than 1.15.

In the tire 2, the angle θ of the tangent line TL60, which is tangent to the contour line of the tread surface 22 at the tilt confirmation position P60, with respect to the axial direction is not less than 2.5 degrees and not greater than 3.5 degrees, and the shape index F60 for the ground-contact surface obtained when a load equal to 70% of the standardized load is applied to the tire 2 in the standard state and the tire 2 is brought into contact with a flat surface is not less than 1.00 and not greater than 1.20.

In the tire 2, a flat tread surface 22 is formed, and generation of a force applied in a direction opposite to a cornering direction is effectively suppressed at a ground-contact surface formed when the tread surface 22 comes into contact with a road surface. In the tire 2, the flat tread surface 22 can effectively contribute to generation of a cornering force. The tire 2 can generate a larger cornering force. The tire 2 can contribute to improvement of cornering performance.

In the tire 2, the ratio (Rc/Rm) of the radius Rc of the first arc to the radius Rm of the second arc is preferably not less than 2.00 and not greater than 4.00.

When the ratio (Rc/Rm) is set to be not less than 2.00, a flatter tread surface 22 is formed. The tread surface 22 effectively comes into contact with a road surface, so that a wider ground-contact surface is formed. A large cornering force is generated with the tire 2. From this viewpoint, the ratio (Rc/Rm) is more preferably not less than 2.50.

When the ratio (Rc/Rm) is set to be not greater than 4.00, the shape index F60 is prevented from being less than 1.00. In other words, the ground-contact surface is formed in an appropriate shape that is elongated without being narrow around the center thereof. From this viewpoint, the ratio (Rc/Rm) is more preferably not greater than 3.50.

In the present invention, a length L1 of the first arc means the length from the equator PC to the boundary CM on a circle having the radius Rc. A length L2 of the second arc means the length from the boundary CM to the boundary MS on a circle having the radius Rm. A length L3 of the third arc means the length from the boundary MS to the boundary SH on a circle having the radius Rs.

In the tire 2, the ratio (L2/L1) of the length L2 of the second arc to the length L1 of the first arc is preferably not less than 0.80 and not greater than 1.00.

When the ratio (L2/L1) is set to be not less than 0.80, the boundary CM between the first arc and the second arc is prevented from being included in an axially outer portion, of the ground-contact surface, from a position at which the ratio (AX/A100) is 60%. Accordingly, the shape index F60 is prevented from being less than 1.00. In other words, the ground-contact surface is formed in an appropriate shape that is elongated without being narrow around the center thereof. From this viewpoint, the ratio (L2/L1) is more preferably not less than 0.85.

When the ratio (L2/L1) is set to be not greater than 1.00, a flatter tread surface 22 is formed. The tread surface 22 effectively comes into contact with a road surface, so that a wider ground-contact surface is formed. A large cornering force is generated with the tire 2. From this viewpoint, the ratio (L2/L1) is more preferably not greater than 0.95.

In the tire 2, in order to increase a cornering force, a flat tread surface 22 is formed in consideration of generation of a force in a direction opposite to a cornering direction. In the tire 2, a portion, of the tread surface 22, from the equator PC to the boundary SH is composed of the first arc, the second arc, and the third arc, and there is a concern that depending on the configuration thereof, the difference between the outer diameter of a crown portion and the outer diameter of a shoulder portion may be increased. In this case, the ground-contact length at the shoulder portion is shortened, and wear is likely to occur at the crown portion, so that uneven wear resistance is decreased. Due to this, even if the tire 2 is tuned so as to be able to generate a higher cornering force, the tire 2 cannot sufficiently exhibit its function.

However, in the tire 2, the above-described shape index F80 is taken into consideration. Specifically, the shape index F80 for the ground-contact surface obtained when a load equal to 70% of the standardized load is applied to the tire 2 in the standard state and the tire 2 is brought into contact with a flat surface is preferably not less than 1.25 and not greater than 1.45.

When the shape index F80 is set to be not greater than 1.45, the difference between the outer diameter of the crown portion and the outer diameter of the shoulder portion is reduced, so that the ground-contact length at the shoulder portion is set to an appropriate length. The wear energy in the ground-contact surface is made uniform, so that occurrence of uneven wear is suppressed. With the tire 2, a cornering force is effectively increased while good uneven wear resistance is maintained. From this viewpoint, the shape index F80 is more preferably not greater than 1.40 and further preferably not greater than 1.35.

When the shape index F80 is set to be not less than 1.25, generation of a force in a direction opposite to a cornering direction is more effectively suppressed at the ground-contact surface. A cornering force is effectively increased with the tire 2. From this viewpoint, the shape index F80 is more preferably not less than 1.30.

The ratio (B100/WC) of the equator ground-contact length B100 to the ground-contact width WC on the ground-contact surface of the tire 2 obtained when a load equal to 70% of the standardized load is applied to the tire 2 in the standard state and the tire 2 is brought into contact with a flat surface, is preferably not greater than 0.65. Accordingly, a flat tread surface 22 is formed, so that generation of a force in a direction opposite to a cornering direction is effectively suppressed at a ground-contact surface formed when the tread surface 22 comes into contact with a road surface. In the tire 2, the flat tread surface 22 can effectively contribute to generation of a cornering force. The tire 2 can generate a larger cornering force. The tire 2 can contribute to improvement of cornering performance. From this viewpoint, the ratio (B100/WC) is more preferably not greater than 0.60.

The ratio (B100/WC) is preferably not less than 0.40. Accordingly, the wear energy in the ground-contact surface is made uniform, so that occurrence of uneven wear is suppressed. From this viewpoint, the ratio (B100/WC) is more preferably not less than 0.45.

In the tire 2, the ratio (Rs/Rm) of the radius Rs of the third arc to the radius Rm of the second arc is preferably not less than 0.30 and not greater than 0.40.

When the ratio (Rs/Rm) is set to be not less than 0.30, the difference between the outer diameter of the crown portion and the outer diameter of the shoulder portion is reduced, so that the ground-contact length at the shoulder portion is set to an appropriate length. The wear energy in the ground-contact surface is made uniform, so that occurrence of uneven wear is suppressed. With the tire 2, a cornering force is effectively increased while good uneven wear resistance is maintained. From this viewpoint, the ratio (Rs/Rm) is more preferably not less than 0.33.

When the ratio (Rs/Rm) is set to be not greater than 0.40, generation of a force in a direction opposite to a cornering direction is more effectively suppressed at the ground-contact surface. A cornering force is effectively increased with the tire 2. From this viewpoint, the ratio (Rs/Rm) is more preferably not greater than 0.37.

In the tire 2, the ratio (HWMS/HWH) of the distance HWMS in the axial direction from the equator plane CL to the boundary MS to the distance HWH in the axial direction from the equator plane CL to the reference ground-contact position PH is preferably not less than 60% and not greater than 90%.

When the ratio (HWMS/HWH) is set to be not less than 60%, the difference between the outer diameter of the crown portion and the outer diameter of the shoulder portion is reduced, so that the ground-contact length at the shoulder portion is set to an appropriate length. The wear energy in the ground-contact surface is made uniform, so that occurrence of uneven wear is suppressed. With the tire 2, a cornering force is effectively increased while good uneven wear resistance is maintained. From this viewpoint, the ratio (HWMS/HWH) is more preferably not less than 65%, further preferably not less than 70%, and particularly preferably not less than 75%.

When the ratio (HWMS/HWH) is set to be not greater than 90%, generation of a force in a direction opposite to a cornering direction is more effectively suppressed at the ground-contact surface. A cornering force is effectively increased with the tire 2. From this viewpoint, the ratio (HWMS/HWH) is more preferably not greater than 85% and further preferably not greater than 80%.

### [Outline of Second Embodiment of Present Invention]

### [Configuration 1]

A tire according to an aspect of the present invention is defined in claim 7.

By forming the tire as defined in claim 7, in the tire, generation of a force in a direction opposite to a cornering direction is effectively suppressed at a ground-contact surface formed when the tread surface comes into contact with a road surface. In the tire, the tread surface can effectively contribute to generation of a cornering force. The tire can generate a larger cornering force. The tire can contribute to improvement of cornering performance. Moreover, the wear energy in the ground-contact surface is made uniform, so that occurrence of uneven wear is suppressed. The tire can achieve improvement of cornering performance while maintaining good uneven wear resistance.

### [Configuration 2]

Preferably, the tire may be formed as defined in claim 8, a contour line of the tread surface in the meridian cross-section of the tire includes a plurality of arcs, the plurality of arcs include a first arc having a center on the equator plane, a pair of second arcs each located axially outward of the first arc and connected to the first arc, and a pair of third arcs each located axially outward of the second arc and connected to the second arc, and a ratio of a radius of the third arc to a radius of the second arc is not less than 0.30 and not greater than 0.40.

By forming the tire as defined in claim 8, the wear energy in the ground-contact surface is effectively made uniform. In the tire, good uneven wear resistance is maintained. Generation of a force in a direction opposite to a cornering direction is more effectively suppressed at the ground-contact surface, so that a cornering force is effectively increased.

### [Configuration 3]

Preferably, the tire may be formed as defined in claim 9, a ratio of a distance in an axial direction from the equator plane to a boundary between the second arc and the third arc to a distance in the axial direction from the equator plane to the reference ground-contact position is not less than 60% and not greater than 90%.

By forming the tire as defined in claim 9, the wear energy in the ground-contact surface is promoted to be made uniform. In the tire, good uneven wear resistance is maintained. Generation of a force in a direction opposite to a cornering direction is more effectively suppressed at the ground-contact surface, so that a cornering force is effectively increased.

### [Configuration 4]

Preferably, the tire may be formed as defined in claim 12, a ratio of the equator ground-contact length measured along the equator plane to a reference ground-contact length at a position corresponding to a width of 60% of the ground-contact width of the ground-contact surface, on the ground-contact surface, is a shape index F60, and the shape index F60 is not less than 1.00 and not greater than 1.20.

By forming the tire as defined in claim 12, a flatter tread surface is formed, and generation of a force in a direction opposite to a cornering direction is more effectively suppressed at the ground-contact surface. The tire can generate a larger cornering force.

### [Configuration 5]

Preferably, the tire may be formed as defined in claim 10, a ratio of a radius of the first arc to the radius of the second arc is not less than 2.00 and not greater than 4.00.

By forming the tire as defined in claim 10, a flatter tread surface is formed, and generation of a force in a direction opposite to a cornering direction is more effectively suppressed at the ground-contact surface. The tire can generate a larger cornering force.

### [Configuration 6]

Preferably, the tire may be formed as defined in claim 11, a ratio of a length of the second arc to a length of the first arc is not less than 0.80 and not greater than 1.00.

By forming the tire as defined in claim 11, a flatter tread surface is formed, and generation of a force in a direction opposite to a cornering direction is more effectively suppressed at the ground-contact surface. The tire can generate a larger cornering force.

### [Configuration 7]

Preferably, the tire may be formed as defined in claim 14, the tire has a nominal cross-sectional width of 215 mm or more, and the tire has a nominal aspect ratio of 55% or less.

By forming the tire as defined in claim 14, in the tire, the flat tread surface can effectively contribute to generation of a cornering force. The tire can generate a larger cornering force. The tire can contribute to improvement of cornering performance.

### [Details of Second Embodiment of Present Invention]

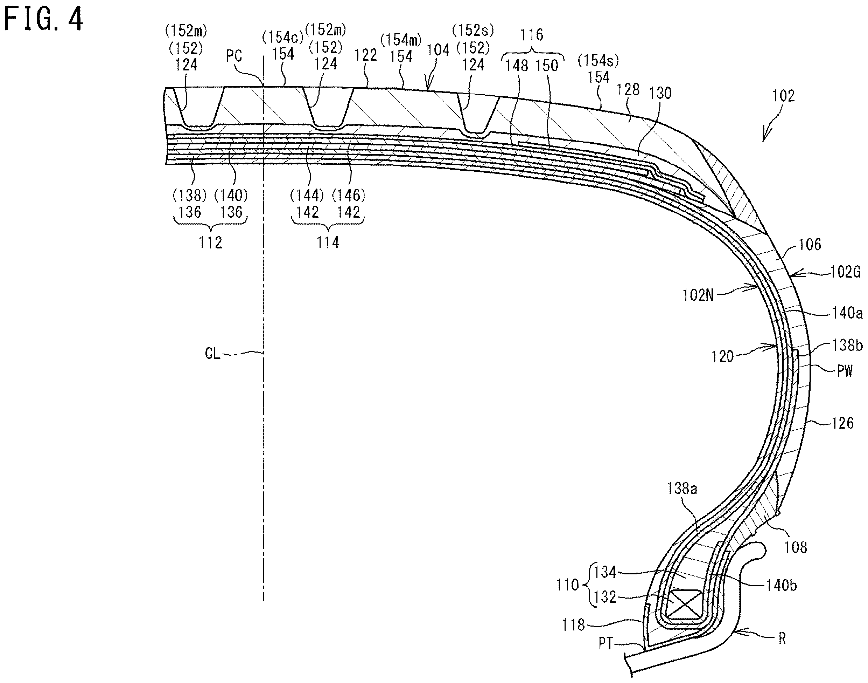

FIG. 4 shows a part of a tire 102 according to a second embodiment of the present invention. The tire 102 is a pneumatic tire for a passenger car.

FIG. 4 shows a part of a cross-section (hereinafter, meridian cross-section) of the tire 102 taken along a plane including the rotation axis of the tire 102. In FIG. 4, the right-left direction is the axial direction of the tire 102, and the up-down direction is the radial direction of the tire 102. The direction perpendicular to the surface of the drawing sheet of FIG. 4 is the circumferential direction of the tire 102. An alternate long and short dash line CL represents the equator plane of the tire 102.

In FIG. 4, the tire 102 is fitted on a rim R (standardized rim). The interior of the tire 102 is filled with air to adjust the internal pressure of the tire 102.

In FIG. 4, a position indicated by reference character PC is the point of intersection of an outer surface 102G (specifically, a tread surface described later) of the tire 102 and the equator plane CL. The point of intersection PC is the equator of the tire 102. In the case where a groove is located on the equator plane CL, the equator PC is specified on the basis of a virtual outer surface obtained on the assumption that no groove is provided thereon. The equator PC is also a radially outer end of the tire 102.

In FIG. 4, a position indicated by reference character PW is an axially outer end (hereinafter, outer end PW) of the tire 102. In the case where decorations such as patterns and letters are present on the outer surface 102G, the outer end PW is specified on the basis of a virtual outer surface obtained on the assumption that the decorations are not present thereon.

The distance in the axial direction from a first outer end PW to a second outer end PW, obtained in the standardized state, is the cross-sectional width (see JATMA or the like) of the tire 102.

Each outer end PW is also referred to as maximum width position. The maximum width position is a position at which the tire 102 has a maximum width. The maximum width obtained in the standardized state is the above-described cross-sectional width.

In FIG. 4, a position indicated by reference character PT is a toe of the tire 102. The toe PT is the boundary between the outer surface 102G and an inner surface 102N of the tire 102.

The tire 102 includes a tread 104, a pair of sidewalls 106, a pair of clinches 108, a pair of beads 110, a carcass 112, a belt 114, a band 116, a pair of chafers 118, and an inner liner 120.

The tread 104 is formed from a crosslinked rubber. The tread 104 comes into contact with a road surface at a tread surface 122 thereof. The tread 104 has the tread surface 122 which comes into contact with a road surface. Grooves 124 are formed on the tread 104. The tread 104 is located radially outward of the carcass 112.

The tread surface 122 is a part of the outer surface 102G of the tire 102. Side surfaces 126 are connected to the tread surface 122. The outer surface 102G of the tire 102 includes the tread surface 122 and a pair of the side surfaces 126.

The tread surface 122 has the equator PC. Each side surface 126 has the maximum width position PW. The outer surface 102G includes the equator PC and the maximum width positions PW.

The tread 104 of the tire 102 includes a cap portion 128 and a base portion 130. The cap portion 128 includes the tread surface 122. The cap portion 128 is formed from a crosslinked rubber for which wear resistance and grip performance are taken into consideration. The base portion 130 is located radially inward of the cap portion 128. The entirety of the base portion 130 is covered with the cap portion 128. The base portion 130 is formed from a crosslinked rubber that has low heat generation properties. A component between the cap portion 128 and the sidewall 106 is a wing which is not designated by a reference character. The cap portion 128 and the sidewall 106 are joined to each other via the wing.

In the tire 102, a loss tangent Ltc at 30°C of the cap portion 128 is preferably not less than 0.25. The cap portion 128 can contribute to improvement of grip performance. In particular, in sport driving on a circuit or the like, the cap portion 128 can effectively contribute to increasing a cornering force. In this respect, it is more preferable if the loss tangent Ltc is higher, and thus a preferable upper limit thereof is not set.

In the tire 102, a loss tangent Ltb at 30°C of the base portion 130 is preferably not greater than 0.11. The base portion 130 contributes to reduction of rolling resistance. In this respect, it is more preferable if the loss tangent Ltb is lower, and thus a preferable lower limit thereof is not set.

Each sidewall 106 is connected to the tread 104. Each sidewall 106 is located radially inward of the tread 104. The sidewall 106 is located axially outward of the carcass 112. The sidewall 106 is formed from a crosslinked rubber for which cut resistance is taken into consideration. The sidewall 106 forms a part of the side surface 126.

Each clinch 108 is located radially inward of the sidewall 106. The clinch 108 comes into contact with the rim R. The clinch 108 is formed from a crosslinked rubber for which abrasion resistance is taken into consideration. The clinch 108 forms a part of a bead portion.

Each bead 110 is located axially inward of the clinch 108. The bead 110 is located radially inward of the sidewall 106.

The bead 110 includes a core 132 and an apex 134. The core 132 extends in the circumferential direction. The core 132 includes a bead wire made of steel, which is not shown. The apex 134 is located radially outward of the core 132. The apex 134 is tapered outward in the radial direction. The apex 134 is formed from a crosslinked rubber that has high stiffness.

The carcass 112 is located inward of the tread 104, the pair of sidewalls 106, and the pair of clinches 108. The carcass 112 extends on and between the pair of beads 110, that is, on and between a first bead 110 and a second bead 110. The carcass 112 includes at least one carcass ply 136.

The carcass 112 of the tire 102 shown in FIG. 4 includes two carcass plies 136. Each carcass ply 136 includes a large number of carcass cords aligned with each other, which are not shown. These carcass cords intersect the equator plane CL. The carcass 112 of the tire 102 has a radial structure.

Of the two carcass plies 136, the carcass ply 136 located radially inward on the inner side of the tread 104 is a first carcass ply 138. The carcass ply 136 located radially outward of the first carcass ply 138 on the inner side of the tread 104 is a second carcass ply 140.

The first carcass ply 138 includes a first ply body 138a and a pair of first turned-up portions 138b. The first ply body 138a extends between the pair of beads 110. Each first turned-up portion 138b is connected to the first ply body 138a and turned up around the bead 110 from the inner side toward the outer side in the axial direction.

The second carcass ply 140 includes a second ply body 140a and a pair of second turned-up portions 140b. The second ply body 140a extends between the pair of beads 110. Each second turned-up portion 140b is connected to the second ply body 140a and turned up around the bead 110 from the inner side toward the outer side in the axial direction.

In the tire 102, an end of the first turned-up portion 138b is located radially outward of the maximum width position PW. An end of the second turned-up portion 140b is located radially inward of the maximum width position PW. The end of the second turned-up portion 140b is located between an outer end of the apex 134 and the core 132 in the radial direction.

The second turned-up portion 140b is located axially inward of the first turned-up portion 138b. The end of the second turned-up portion 140b is interposed between the apex 134 and the first turned-up portion 138b.

The carcass 112 shown in FIG. 4 has a high turned-up (HTU) structure. In the tire 102, the structure of the carcass 112 is not particularly limited. The structure of the carcass 112 may be an ultra-high turned-up (U-HTU) structure, or may be a low turned-up (LTU) structure. The structure of the carcass 112 is determined as appropriate according to the specifications of the tire 102.

In the tire 102, the carcass cords are covered with a topping rubber (hereinafter, carcass cord covering layer). Examples of an elastomer composition that can be used for the carcass cord covering layer include a rubber composition and a thermoplastic elastomer composition.

The carcass cords and the carcass cord covering layer of the tire 102 have the same configurations as those of the carcass cords and the carcass cord covering layer of the above described tire 2. The description of the carcass cords and the carcass cord covering layer of the tire 102 is omitted.

The belt 114 is located radially inward of the tread 104. The belt 114 is stacked on the carcass 112. The above-described equator plane CL intersects the belt 114 at the center of the axial width of the belt 114.

In the tire 102, the axial width of the belt 114 is not less than 70% and not greater than 90% of the cross-sectional width of the tire 102.

The belt 114 includes at least one layer 142. The belt 114 may be composed of a plurality of layers 142 stacked in the radial direction. The belt 114 of the tire 102 includes two layers 142 stacked in the radial direction. The layer 142 located radially outward of the second ply body 140a and stacked on the second ply body 140a is a first layer 144. The layer 142 located radially outward of the first layer 144 and stacked on the first layer 144 is a second layer 146. The belt 114 includes the first layer 144 and the second layer 146.

As shown in FIG. 4, an end of the second layer 146 is located axially inward of an end of the first layer 144. The second layer 146 is narrower than the first layer 144. The length from the end of the second layer 146 to the end of the first layer 144 is not less than 3 mm and not greater than 10 mm. The above-described axial width of the belt 114 is represented as the axial width of the wider first layer 144.

Each of the first layer 144 and the second layer 146 includes a large number of belt cords aligned with each other, which are not shown. These belt cords are covered with a topping rubber (hereinafter, belt cord covering layer). Each belt cord is tilted relative to the equator plane CL. The belt cord is a steel cord.

The belt cords and the belt cord covering layer of the tire 102 have the same configurations as those of the belt cords and the belt cord covering layer of the above-described tire 2. The description of the belt cords and the belt cord covering layer of the tire 102 is omitted.

In the belt 114, a plurality of the steel cords are arranged in the width direction thereof as in the above-described belt 14. The number of cords arranged in the width direction is not particularly limited, but the product of the number of cords arranged in the width direction per 5 cm and the cross-sectional area of the cord is preferably in the range of 4.5 to 15.0 (mm²/5 cm).

The band 116 is located between the tread 104 and the belt 114 in the radial direction. The band 116 is stacked on the belt 114.

An end of the band 116 is located axially outward of an end of the belt 114. The length from the end of the belt 114 to the end of the band 116 is not less than 3 mm and not greater than 7 mm.

The band 116 includes a helically wound band cord which is not shown. The band cord extends substantially in the circumferential direction. Specifically, an angle of the band cord with respect to the circumferential direction is not greater than 5°. The band 116 has a jointless structure.

The band cord is an organic fiber cord. As the band cord, a cord that is the same as the above-described carcass cords is used.

The band cord is covered with a topping rubber. An elastomer composition and various ingredients that are the same as those for the carcass cord covering layer included in the above-described carcass 112 are used for the topping rubber, that is, a band cord covering layer.

The band 116 includes a full band 148 and a pair of edge bands 150.

The full band 148 is stacked on the belt 114. The full band 148 covers the entirety of the belt 114. Each end of the full band 148 is located axially outward of the end of the belt 114.

The pair of edge bands 150 are arranged so as to be spaced apart from each other with the equator plane CL therebetween. Each edge band 150 is stacked on the full band 148. The edge band 150 covers a portion at the end of the full band 148.

The band 116 may be composed of a full band 148. The band 116 may be composed of two full bands 148 stacked in the radial direction. The band 116 may be composed of a pair of edge bands 150.

Each chafer 118 is located radially inward of the bead 110. The chafer 118 comes into contact with the rim R. The chafer 118 of the tire 102 includes a fabric and a rubber with which the fabric is impregnated.

The inner liner 120 is located inward of the carcass 112. The inner liner 120 forms the inner surface 102N of the tire 102. The inner liner 120 is formed from a crosslinked rubber that has an excellent air blocking property. The inner liner 120 maintains the internal pressure of the tire 102.

As described above, the grooves 124 are formed on the tread 104. The grooves 124 include a groove extending in the circumferential direction (hereinafter, circumferential groove 152).

In the tire 102, at least three circumferential grooves 152 are formed on the tread 104. On the tread 104 shown in FIG. 4, four circumferential grooves 152 are formed. Accordingly, five land portions 154 are formed.

Among the four circumferential grooves 152, the circumferential groove 152 located on each outer side in the axial direction is a shoulder circumferential groove 152s. The circumferential groove 152 located axially inward of the shoulder circumferential groove 152s is a middle circumferential groove 152m.

Among the five land portions 154, the land portion 154 located on each outer side in the axial direction is a shoulder land portion 154s. The land portion 154 located axially inward of the shoulder land portion 154s is a middle land portion 154m. The land portion 154 located axially inward of the middle land portion 154m is a center land portion 154c.

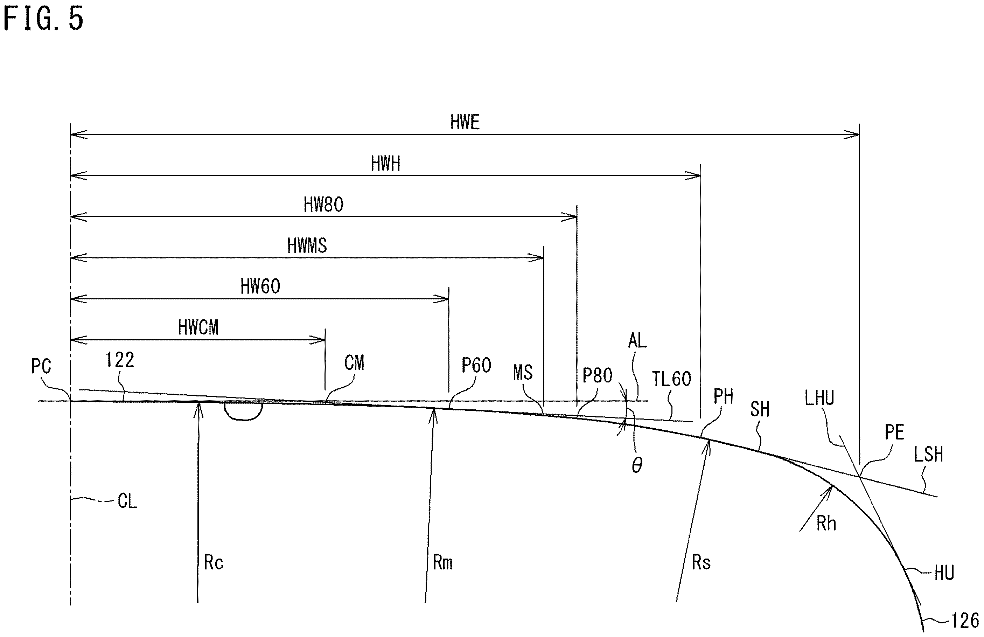

FIG. 5 shows a part of a contour line of the outer surface 102G in the meridian cross-section of the tire 102. The contour line is represented by a virtual outer surface obtained on the assumption that grooves and decorations such as patterns and letters are not present.

Although not described in detail, in the present invention, the contour line of the outer surface 102G is obtained by measuring the outer surface shape of the tire 102 in the reference state, for example, using a displacement sensor. The contour line of the outer surface 102G may be specified on the basis of the shape of a cavity surface of a mold (not shown) for shaping the outer surface 102G of the tire 102.

In the meridian cross-section, a contour line of the tread surface 122 includes a plurality of arcs aligned in the axial direction. This contour line is composed of the plurality of arcs aligned in the axial direction.

Among the plurality of arcs, the arc located on the outermost side in the axial direction is a shoulder arc. In FIG. 5, an arrow indicated by reference character Rh represents the radius of the shoulder arc. The shoulder arc has the smallest radius Rh among the plurality of arcs included in the contour line of the tread surface 122.

The contour line of the tread surface 122 includes a pair of shoulder arcs. Contour lines of the side surfaces 126 are connected to the respective shoulder arcs.

In FIG. 5, reference character HU indicates an outer end of the shoulder arc. The outer end HU is the boundary between the shoulder arc and the contour line of the side surface 126. Reference character SH indicates an inner end of the shoulder arc. The inner end SH is the boundary between the shoulder arc and an arc (third arc described later) located axially inward of the shoulder arc.

The contour line of the tread surface 122 includes at least three arcs between the pair of shoulder arcs, that is, between a first shoulder arc and a second shoulder arc (not shown). In the tread surface 122 of the tire 102, the contour line thereof includes five arcs between the first shoulder arc and the second shoulder arc.

Among the five arcs, the arc located at the center in the axial direction is a first arc. In FIG. 5, an arrow indicated by reference character Rc represents the radius of the first arc. The first arc passes through the equator PC. Although not shown, the center of the first arc is located on the equator plane CL.

The arc located adjacent to the first arc is a second arc. The second arc is located axially outward of the first arc, and is connected to the first arc. In FIG. 5, an arrow indicated by reference character Rm represents the radius of the second arc. A position indicated by reference character CM is the boundary between the first arc and the second arc. In the tire 102, the second arc is tangent to the first arc at the boundary CM.

The arc located adjacent to the second arc is the third arc. The third arc is located axially outward of the second arc, and is connected to the second arc. In FIG. 5, an arrow indicated by reference character Rs represents the radius of the third arc. A position indicated by reference character MS is the boundary between the second arc and the third arc. In the tire 102, the third arc is tangent to the second arc at the boundary MS.

The arc located adjacent to the third arc is the above-described shoulder arc. As described above, the inner end SH of the shoulder arc is the boundary between the third arc and the shoulder arc. In the tire 102, the shoulder arc is tangent to the third arc at the boundary SH.

The contour line of the tread surface 122 includes the first arc, a pair of the second arcs, a pair of the third arcs, and the pair of shoulder arcs. The radius Rm of each second arc is smaller than the radius Rc of the first arc. The radius Rs of each third arc is smaller than the radius Rm of each second arc. The radius Rh of each shoulder arc is smaller than the radius Rs of each third arc.

In FIG. 5, a straight line LSH is a tangent line that is tangent to the shoulder arc at the boundary SH. A straight line LHU is a tangent line that is tangent to the shoulder arc at the boundary HU. Reference character PE represents the point of intersection of the tangent line LSH and the tangent line LHU. In the present invention, the point of intersection PE is a reference end of the tread 104. A length indicated by reference character HWE is the distance in the axial direction from the equator plane CL to the reference end PE. In the present invention, the distance HWE in the axial direction is a reference width of the tread 104. A length that is twice the reference width HWE is the width of the tread 104.

In FIG. 5, a length indicated by reference character HWCM is the distance in the axial direction from the equator plane CL to the boundary CM. A length indicated by reference character HWMS is the distance in the axial direction from the equator plane CL to the boundary MS.

In the tire 102, the ratio (HWCM/HWE) of the distance HWCM in the axial direction to the reference width HWE is preferably not less than 25% and not greater than 35%. The ratio (HWMS/HWE) of the distance HWMS in the axial direction to the reference width HWE is preferably not less than 55% and not greater than 65%.

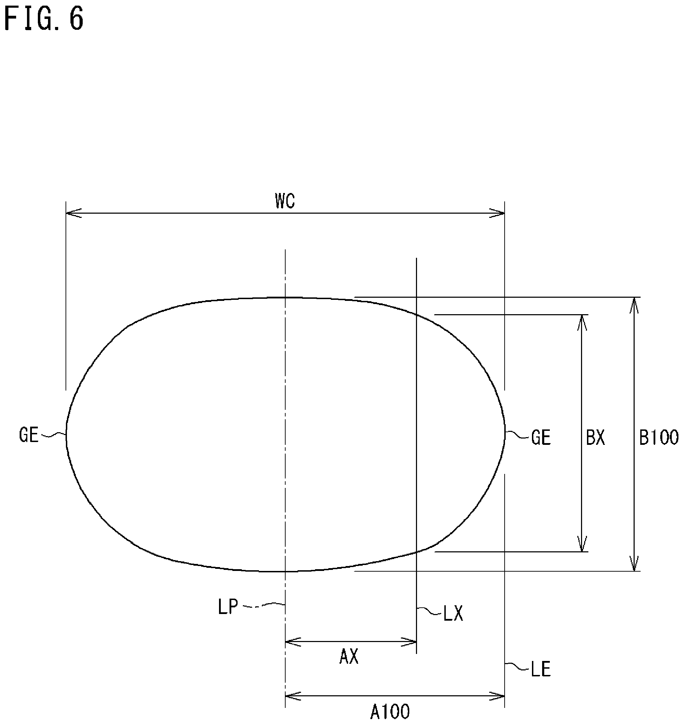

FIG. 6 shows the contour of a ground-contact surface of the tire 102. In FIG. 6, the right-left direction corresponds to the axial direction of the tire 102. The up-down direction corresponds to the circumferential direction of the tire 102.

The contour of the ground-contact surface is obtained as follows, using a tire ground-contact surface shape measuring device (not shown). A load equal to 70% of the standardized load is applied to the tire 102 in the standard state, and the tire 102 is brought into contact with a flat surface. At this time, the tire 102 is placed such that the axial direction thereof is parallel to the flat surface. The camber angle of the tire 102 is set to 0 degrees, and the above-described load is applied to the tire 102 in a direction perpendicular to the flat surface.

Although not described in detail, an image of a ground-contact surface formed when the tire 102 comes into contact with the flat surface is obtained by a known method. The contour of the ground-contact surface is specified on the basis of the obtained ground-contact surface image.

The contour of the ground-contact surface is obtained by tracing the perimeter of the ground-contact surface in the ground-contact surface image. If the perimeter of the ground-contact surface is interrupted by a groove, the contour of the ground-contact surface is traced by connecting the interrupted portion with a straight line.

The ground-contact surface having the contour obtained thus is used as the ground-contact surface of the tire 102 obtained by applying the load equal to 70% of the standardized load to the tire 102 in the standard state and bringing the tire 102 into contact with the flat surface. The shape of the ground-contact surface is analyzed on the basis of the contour of the obtained ground-contact surface.

In FIG. 6, each position indicated by reference character GE is an axially outer end of the ground-contact surface. In the present invention, the axially outer end GE is a ground-contact end. A length indicated by reference character WC is a ground-contact width. The ground-contact width WC is the distance in the axial direction from a first ground-contact end GE to a second ground-contact end GE, and is specified on the ground-contact surface shown in FIG. 6.

In FIG. 6, an alternate long and short dash line LP extending in the up-down direction is a straight line, corresponding to the equator PC of the tire 102, on the ground-contact surface. If it is difficult to specify the equator PC on the ground-contact surface, the center line in the axial direction of the ground-contact width WC is used as the straight line corresponding to the equator PC. A double-headed arrow B100 represents the length of a line of intersection of a plane including the straight line LP and the reference ground-contact surface. In the tire 102, the length B100 of the line of intersection is an equator ground-contact length measured along the equator plane CL on the ground-contact surface.

In FIG. 6, a solid line LE is a straight line that passes through the ground-contact end GE and that is parallel to the straight line LP. A length indicated by reference character A100 is the distance in the axial direction from the straight line LP to the straight line LE. The distance A100 corresponds to half the ground-contact width WC.

A solid line LX is a straight line that is located between the straight line LE and the straight line LP and that is parallel to the straight line LE and the straight line LP. A length indicated by a double-headed arrow AX is the distance in the axial direction from the straight line LP to the straight line LX. A double-headed arrow BX represents the length of a line of intersection of a plane including the straight line LX and the ground-contact surface.

In the present invention, the length BX is a ground-contact length at a predetermined position on the ground-contact surface, and is referred to as reference ground-contact length. The ratio (B100/BX) of the equator ground-contact length B100 to the reference ground-contact length BX is a shape index, and the shape of the ground-contact surface is grasped by this shape index.

In the present invention, the ratio (AX/A100) of the distance AX to the distance A100 is set to 60% or 80%.

In the case where the ratio (AX/A100) is 60%, the length BX means a ground-contact length at a position corresponding to a width of 60% of the ground-contact width WC on the ground-contact surface, and this ground-contact length is represented as a reference ground-contact length B60. A shape index represented as the ratio (B100/B60) of the equator ground-contact length B100 to the reference ground-contact length B60 is a shape index F60.

In the case where the ratio (AX/A100) is 80%, the length BX means a ground-contact length at a position corresponding to a width of 80% of the ground-contact width WC on the ground-contact surface, and this ground-contact length is represented as a reference ground-contact length B80. A shape index represented as the ratio (B100/B80) of the equator ground-contact length B100 to the reference ground-contact length B80 is a shape index F80.

In FIG. 5, a position indicated by reference character PH is a position, on the tread surface 122, corresponding to the ground-contact end GE shown in FIG. 6. In the present invention, the position PH is a reference ground-contact position.

As shown in FIG. 5, in the tire 102, the reference ground-contact position PH is located between the boundary MS and the boundary SH in the axial direction. In other words, the reference ground-contact position PH is located on the third arc on the contour line of the tread surface 122. In the tire 102, a portion, of the tread surface 122, that is adjacent to the shoulder arc and that is represented by the arc located axially inward of the shoulder arc includes the reference ground-contact position PH.

A length indicated by reference character HWH is the distance in the axial direction from the equator plane CL to the reference ground-contact position PH.

In the tire 102, the ratio (HWH/HWE) of the distance HWH in the axial direction from the equator plane CL to the reference ground-contact position PH to the reference width HWE of the tread 104 is preferably not less than 75% and not greater than 90%.

A position indicated by reference character P60 is a specific position on the tread surface 122. In the present invention, the position P60 is also referred to as tilt confirmation position. A length indicated by reference character HW60 is the distance in the axial direction from the equator plane CL to the tilt confirmation position P60. In the present invention, the ratio (HW60/HWH) of the distance HW60 in the axial direction to the distance HWH in the axial direction is set to 60%. The tilt confirmation position P60 is a position, on the tread surface 122, at which the distance HW60 in the axial direction from the equator plane CL is 60% of the distance HWH in the axial direction from the equator plane CL to the reference ground-contact position PH.

As shown in FIG. 5, in the tire 102, the tilt confirmation position P60 is located between the boundary CM and the boundary MS in the axial direction. In other words, the tilt confirmation position P60 is located on the second arc on the contour line of the tread surface 122.

A position indicated by reference character P80 is a specific position on the tread surface 122. A length indicated by reference character HW80 is the distance in the axial direction from the equator plane CL to the specific position P80. In the present invention, the ratio (HW80/HWH) of the distance HW80 in the axial direction to the distance HWH in the axial direction is set to 80%. The position P80 is a position, on the tread surface 122, at which the distance HW80 in the axial direction from the equator plane CL is 80% of the distance HWH in the axial direction from the equator plane CL to the reference ground-contact position PH.

As shown in FIG. 5, in the tire 102, the position P80 is located axially outward of the boundary MS. In other words, the position P80 is located on the third arc on the contour line of the tread surface 122. In the tire 102, the position P80 may coincide with the boundary MS, or the position P80 may be located axially inward of the boundary MS. In the case where the position P80 is located axially inward of the boundary MS, the position P80 is located on the second arc on the contour line of the tread surface 122.

In FIG. 5, a solid line indicated by reference character AL is a straight line that passes through the equator PC and that extends in the axial direction. A straight line indicated by reference character TL60 is a tangent line that is tangent to the contour line of the tread surface 122 at the tilt confirmation position P60. An angle θ is an angle formed between the straight line AL and the tangent line TL60. In the present invention, the angle θ is an angle of the tangent line TL60, which is tangent to the contour line of the tread surface 122 at the tilt confirmation position P60, with respect to the axial direction in the meridian cross-section of the tire 102.

In sport driving on a circuit or the like, a vehicle is required to be able to corner at a higher speed. Therefore, the present inventor has checked the state of generation of a force at a ground-contact surface during cornering at a camber angle of -3 degrees and a slip angle of 2 degrees using a finite element method (FEM) in order to further increase the cornering force generated during cornering, and as a result, the present inventor has found that a force in a direction opposite to the cornering direction is generated at a part of the ground-contact surface in a conventional tire. The force in the direction opposite to the cornering direction reduces the cornering force. Since the cornering force can be further increased if the generation of the force in the direction opposite to the cornering direction is suppressed, the present inventor has reviewed the relationship between the configuration of the contour line of the tread surface and the shape of the ground-contact surface in a meridian cross-section of the tire, and has completed the present invention.

In the tire 102, the angle θ of the tangent line TL60, which is tangent to the contour line of the tread surface 122 at the tilt confirmation position P60, with respect to the axial direction in the meridian cross-section is not less than 2.5 degrees and not greater than 3.5 degrees.

Since the angle θ is not greater than 3.5 degrees, a flatter tread surface 122 is formed. The tread surface 122 effectively comes into contact with a road surface, so that a wider ground-contact surface is formed. A large cornering force is generated with the tire 102.

Since the angle θ is not less than 2.5 degrees, even if the tire 102 is mounted on a vehicle at a negative camber, occurrence of wear and damage at a shoulder portion on the vehicle side is suppressed. The tire 102 can achieve improvement of high-speed durability and uneven wear resistance.

If the angle θ exceeds 3.5 degrees, it is difficult to form a desired flat tread surface. In this case, a cornering force is reduced.

If the angle θ is less than 2.5 degrees, when the tire 102 is mounted on a vehicle at a negative camber, wear and damage are likely to occur at the shoulder portion on the vehicle side, so that sufficient high-speed durability and uneven wear resistance cannot be achieved.

The contour line of the tread surface 122 is composed of a plurality of arcs aligned in the axial direction. There is a concern that depending on the configuration of the contour line, the difference between the outer diameter of a crown portion and the outer diameter of a shoulder portion may be increased. In this case, the ground-contact length at the shoulder portion is shortened, and wear is likely to occur at the crown portion, so that uneven wear resistance is decreased. Due to this, even if the tire can be tuned so as to be able to generate a higher cornering force, the tire cannot sufficiently exhibit its function.

However, in the tire 102, the above-described shape index F80 is taken into consideration. Specifically, the shape index F80 for the ground-contact surface obtained when a load equal to 70% of the standardized load is applied to the tire 102 in the standard state and the tire 102 is brought into contact with a flat surface is not less than 1.25 and not greater than 1.45.

Since the shape index F80 is not greater than 1.45, the difference between the outer diameter of the crown portion and the outer diameter of the shoulder portion is reduced, so that the ground-contact length at the shoulder portion is set to an appropriate length. The wear energy in the ground-contact surface is made uniform, so that occurrence of uneven wear is suppressed. With the tire 102, a cornering force is effectively increased while good uneven wear resistance is maintained. From this viewpoint, the shape index F80 is preferably not greater than 1.40 and more preferably not greater than 1.35.

Since the shape index F80 is not less than 1.25, generation of a force in a direction opposite to a cornering direction is more effectively suppressed at the ground-contact surface. A cornering force is effectively increased with the tire 102. From this viewpoint, the shape index F80 is preferably not less than 1.30.

In the tire 102, the angle θ of the tangent line TL60, which is tangent to the contour line of the tread surface 122 at the tilt confirmation position P60, with respect to the axial direction is not less than 2.5 degrees and not greater than 3.5 degrees, and the shape index F80 for the ground-contact surface obtained when a load equal to 70% of the standardized load is applied to the tire 102 in the standard state and the tire 102 is brought into contact with a flat surface is not less than 1.25 and not greater than 1.45.

In the tire 102, generation of a force in a direction opposite to a cornering direction is effectively suppressed at a ground-contact surface formed when the tread surface 122 comes into contact with a road surface. In the tire 102, the tread surface 122 can effectively contribute to generation of a cornering force. The tire 102 can generate a larger cornering force. The tire 102 can contribute to improvement of cornering performance. Moreover, the wear energy in the ground-contact surface is made uniform, so that occurrence of uneven wear is suppressed. The tire 102 can achieve improvement of cornering performance while maintaining good uneven wear resistance.

In the tire 102, the ratio (Rs/Rm) of the radius Rs of the third arc to the radius Rm of the second arc is preferably not less than 0.30 and not greater than 0.40.

When the ratio (Rs/Rm) is set to be not less than 0.30, the difference between the outer diameter of the crown portion and the outer diameter of the shoulder portion is reduced, so that the ground-contact length at the shoulder portion is set to an appropriate length. The wear energy in the ground-contact surface is made uniform, so that occurrence of uneven wear is suppressed. With the tire 102, a cornering force is effectively increased while good uneven wear resistance is maintained. From this viewpoint, the ratio (Rs/Rm) is more preferably not less than 0.33.

When the ratio (Rs/Rm) is set to be not greater than 0.40, generation of a force in a direction opposite to a cornering direction is more effectively suppressed at the ground-contact surface. A cornering force is effectively increased with the tire 102. From this viewpoint, the ratio (Rs/Rm) is more preferably not greater than 0.37.

In the tire 102, the ratio (HWMS/HWH) of the distance HWMS in the axial direction from the equator plane CL to the boundary MS to the distance HWH in the axial direction from the equator plane CL to the reference ground-contact position PH is preferably not less than 60% and not greater than 90%.

When the ratio (HWMS/HWH) is set to be not less than 60%, the difference between the outer diameter of the crown portion and the outer diameter of the shoulder portion is reduced, so that the ground-contact length at the shoulder portion is set to an appropriate length. The wear energy in the ground-contact surface is made uniform, so that occurrence of uneven wear is suppressed. With the tire 102, a cornering force is effectively increased while good uneven wear resistance is maintained. From this viewpoint, the ratio (HWMS/HWH) is more preferably not less than 65%, further preferably not less than 70%, and particularly preferably not less than 75%.

When the ratio (HWMS/HWH) is set to be not greater than 90%, generation of a force in a direction opposite to a cornering direction is more effectively suppressed at the ground-contact surface. A cornering force is effectively increased with the tire 102. From this viewpoint, the ratio (HWMS/HWH) is more preferably not greater than 85% and further preferably not greater than 80%.

In the tire 102, the above-described shape index F60 is preferably not less than 1.00 and not greater than 1.20.

When the shape index F60 is set to be not less than 1.00, the ground-contact surface is formed in an appropriate shape that is elongated without being narrow around the center thereof. The tread surface 122 can effectively contribute to generation of a cornering force. At the ground-contact surface, a force applied in a direction opposite to a cornering direction is less likely to be generated. A large cornering force is generated with the tire 102. From this viewpoint, the shape index F60 is more preferably not less than 1.05.

When the shape index F60 is set to be not greater than 1.20, the ground-contact surface is effectively inhibited from bulging at the center portion. In this case as well, the ground-contact surface is formed in an appropriate shape that is elongated. At the ground-contact surface, a force applied in a direction opposite to a cornering direction is less likely to be generated. A large cornering force is generated with the tire 102. From this viewpoint, the shape index F60 is more preferably not greater than 1.15.

In the tire 102, the ratio (Rc/Rm) of the radius Rc of the first arc to the radius Rm of the second arc is preferably not less than 2.00 and not greater than 4.00.

When the ratio (Rc/Rm) is set to be not less than 2.00, a flatter tread surface 122 is formed. The tread surface 122 effectively comes into contact with a road surface, so that a wider ground-contact surface is formed. A large cornering force is generated with the tire 102. From this viewpoint, the ratio (Rc/Rm) is more preferably not less than 2.50.

When the ratio (Rc/Rm) is set to be not greater than 4.00, the shape index F60 is prevented from being less than 1.00. In other words, the ground-contact surface is formed in an appropriate shape that is elongated without being narrow around the center thereof. From this viewpoint, the ratio (Rc/Rm) is more preferably not greater than 3.50.

In the present invention, a length L1 of the first arc means the length from the equator PC to the boundary CM on a circle having the radius Rc. A length L2 of the second arc means the length from the boundary CM to the boundary MS on a circle having the radius Rm. A length L3 of the third arc means the length from the boundary MS to the boundary SH on a circle having the radius Rs.

In the tire 102, the ratio (L2/L1) of the length L2 of the second arc to the length L1 of the first arc is preferably not less than 0.80 and not greater than 1.00.

When the ratio (L2/L1) is set to be not less than 0.80, the boundary CM between the first arc and the second arc is prevented from being included in an axially outer portion, of the ground-contact surface, from a position at which the ratio (AX/A100) is 60%. Accordingly, the shape index F60 is prevented from being less than 1.00. In other words, the ground-contact surface is formed in an appropriate shape that is elongated without being narrow around the center thereof. From this viewpoint, the ratio (L2/L1) is more preferably not less than 0.85.

When the ratio (L2/L1) is set to be not greater than 1.00, a flatter tread surface 122 is formed. The tread surface 122 effectively comes into contact with a road surface, so that a wider ground-contact surface is formed. A large cornering force is generated with the tire 102. From this viewpoint, the ratio (L2/L1) is more preferably not greater than 0.95.

The ratio (B100/WC) of the equator ground-contact length B100 to the ground-contact width WC on the ground-contact surface of the tire 102 obtained when a load equal to 70% of the standardized load is applied to the tire 102 in the standard state and the tire 102 is brought into contact with a flat surface, is preferably not greater than 0.65. Accordingly, a flat tread surface 122 is formed, so that generation of a force in a direction opposite to a cornering direction is effectively suppressed at a ground-contact surface formed when the tread surface 122 comes into contact with a road surface. In the tire 102, the flat tread surface 122 can effectively contribute to generation of a cornering force. The tire 102 can generate a larger cornering force. The tire 102 can contribute to improvement of cornering performance. From this viewpoint, the ratio (B 100/WC) is more preferably not greater than 0.60.

The ratio (B100/WC) is preferably not less than 0.40. Accordingly, the wear energy in the ground-contact surface is made uniform, so that occurrence of uneven wear is suppressed. From this viewpoint, the ratio (B100/WC) is more preferably not less than 0.45.

As described above, according to the present invention, a tire that can achieve improvement of cornering performance is obtained. The present invention exhibits a more remarkable effect in a tire having a nominal cross-sectional width of 215 mm or more, a nominal aspect ratio of 55% or less, and a land/sea ratio of 65% or more, specifically, a tire for use in sport driving on a circuit or the like.

The tire to which the present invention is applied is preferably a tire having a nominal cross-sectional width of 235 mm or more and a nominal aspect ratio of 50% or less, and is more preferably a tire having a nominal cross-sectional width of 335 mm or more and a nominal aspect ratio of 45% or less.

### EXAMPLES

Hereinafter, the present invention will be described in further detail by means of examples, etc., but the present invention is not limited to these examples.

### [Experiment A]

### [Example 1A]

A pneumatic tire for a passenger car (tire size = 255/40R20) having the basic structure shown in FIGS. 1 and 2 was prepared.

The angle θ, the radius Rc, the ratio (Rc/Rm), the ratio (L2/L1), the shape index F60, and the shape index F80 were set as shown in Table 1 below.

### [Comparative Examples 1A and 2A]

Tires of Comparative Examples 1A and 2A were prepared in the same manner as Example 1A, except that the angle θ, the radius Rc, the ratio (Rc/Rm), the ratio (L2/L1), the shape index F60, and the shape index F80 were set as shown in Table 1 below. The tire of Comparative Example 1A is a conventional tire.

### [Ground-Contact Shape]

Each test tire was fitted onto a rim (size = 20×9.0J), the internal pressure of the tire was set to 230 kPa, and a ground-contact state when a load of 5.01 kN was applied to the tire in a state where a camber angle was set to 0 degrees was calculated using a finite element method to obtain a ground-contact shape. The results are shown in the cells for ground-contact shape in Table 1 below.

### [Generation of Cornering Force]

Each test tire was fitted onto a rim (size = 20×9.0J), the internal pressure of the tire was set to 230 kPa, and for each tire, the state of generation of a force at a ground-contact surface during cornering at a camber angle of -3 degrees and a slip angle of 2 degrees was calculated by a finite element method to obtain a maximum value of a cornering force. The results are shown in the cells for "Cfmax" in Table 1 below as indexes with the result of Comparative Example 1A being regarded as 100. The higher the value is, the larger the generated cornering force is.

**[Table 1]**

| | Comparative Example 1A | Comparative Example 2A | Example 1A |
|---|---|---|---|
| Ground-contact shape | 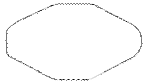 | 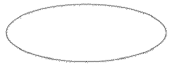 | 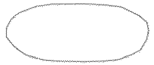 |
| Angle θ [°] | 4.0 | 3.5 | 3.0 |
| Rc [mm] | 1000 | 1500 | 1800 |
| Rc/Rm [-] | 1.92 | 1.92 | 3.00 |
| L2/L1 [-] | 1.00 | 1.00 | 0.91 |
| F60 [-] | 1.40 | 1.30 | 1.10 |
| F80 [-] | 1.60 | 1.40 | 1.30 |
| Cfmax | 100 | 101 | 104 |

As shown in Table 1, it is confirmed that a large cornering force is generated in Example 1A. It is clear that the tire of Example 1A can contribute to improvement of cornering performance. From the evaluation results, advantages of the present invention are clear.

### [Experiment B]

### [Example 1B]

A pneumatic tire for a passenger car (tire size = 255/40R20) having the basic structure shown in FIGS. 4 and 5 was prepared.

The angle θ, the radius Rc, the ratio (Rc/Rm), the ratio (L2/L1), the ratio (Rs/Rm), the ratio (HWMS/HWH), the shape index F60, and the shape index F80 were set as shown in Table 2 below.

### [Examples 2B and 3B and Comparative Example 1B]

Tires of Examples 2B and 3B and Comparative Example 1B were prepared in the same manner as Example 1B, except that the angle θ, the radius Rc, the ratio (Rc/Rm), the ratio (L2/L1), the ratio (Rs/Rm), the ratio (HWMS/HWH), the shape index F60, and the shape index F80 were set as shown in Table 2 below. The tire of Comparative Example 1B is a conventional tire.

### [Ground-Contact Shape]

Each test tire was fitted onto a rim (size = 20×9.0J), the internal pressure of the tire was set to 230 kPa, and a ground-contact state when a load of 5.01 kN was applied to the tire in a state where a camber angle was set to 0 degrees was calculated using a finite element method to obtain a ground-contact shape. The ground-contact shapes of Example 1B and Comparative Example 1B are shown in Table 2 below for reference.

### [Generation of Cornering Force]

Each test tire was fitted onto a rim (size = 20×9.0J), the internal pressure of the tire was set to 230 kPa, and for each tire, the state of generation of a force at a ground-contact surface during cornering at a camber angle of -3 degrees and a slip angle of 2 degrees was calculated by a finite element method to obtain a maximum value of a cornering force. The results are shown in the cells for "Cfmax" in Table 2 below as indexes with the result of Comparative Example 1B being regarded as 100. The higher the value is, the larger the generated cornering force is.

### [Uneven Wear Resistance]

For each tire that was fitted onto a rim (size = 20×9.0J) and whose internal pressure was set to 230 kPa, the wear energy in a ground-contact surface during straight running at a camber angle of -3 degrees was calculated by a finite element method, and the ratio (Cr/Sh) of a wear energy Cr at a crown portion to a wear energy Sh at a shoulder portion was obtained. The results are shown in Table 2 below. The closer to 1.00 the value is, the better the uneven wear resistance is.

**[Table 2]**

| | Comparative Example 1B | Example 1B | Example 2B | Example 3B |
|---|---|---|---|---|
| Ground-contact shape | 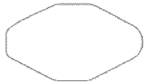 | 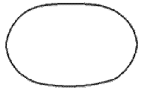 | - | - |
| Angle θ [°] | 4.0 | 3.0 | 3.0 | 3.0 |
| Rc [mm] | 1000 | 1800 | 2000 | 1600 |
| Rc/Rm [-] | 1.92 | 3.00 | 3.00 | 3.00 |
| L2/L1 [-] | 1.00 | 0.91 | 0.91 | 0.91 |
| Rs/Rm [-] | 0.42 | 0.35 | 0.35 | 0.35 |
| HWMS/HWH [%] | 75 | 75 | 75 | 75 |
| F60 [-] | 1.40 | 1.15 | 1.13 | 1.18 |
| F80 [-] | 1.60 | 1.30 | 1.26 | 1.33 |
| Cfmax | 100 | 104 | 104 | 104 |
| Uneven wear resistance | 1.20 | 1.00 | 0.95 | 1.05 |

As shown in Table 2, it is confirmed that in each Example, the wear energy is made uniform, and a large cornering force is generated. It is clear that the tire of each Example can contribute to improvement of cornering performance while maintaining good uneven wear resistance. From the evaluation results, advantages of the present invention are clear.

The above-described technology for improving cornering performance and the above-described technology for achieving improvement of cornering performance while maintaining good uneven wear resistance can also be applied to various tires.

## Claims

1. A tire (2, 102) comprising:
a pair of beads (10, 110);
a carcass (12, 112) extending on and between the pair of beads (10, 110);
a tread (4, 104) located radially outward of the carcass (12, 112); and
a pair of sidewalls (6, 106) located axially outward of the carcass (12, 112), wherein
an outer surface (2G, 102G) of the tire (2, 102) includes a tread surface (22, 122) configured to come into contact with a road surface, and a pair of side surfaces (26, 126) connected to the tread surface (22, 122), and
**characterized in that**
when the tire (2, 102) is in a standard state, in which the tire (2, 102) is fitted on a standardized rim (R) and an internal pressure of the tire (2, 102) is adjusted to a pressure equal to 92% of a standardized internal pressure, and when a load equal to 70% of a standardized load is applied to the tire (2, 102) in the standard state and the tire (2, 102) is brought into contact with a flat surface and the camber angle of the tire (2, 102) is set to 0 degree,
a position, on the tread surface (22, 122), corresponding to a ground-contact end (GE) of a ground-contact surface of the tire (2, 102) is a reference ground-contact position (PH),
a position, on the tread surface (22, 122), at which a distance (HW60) in an axial direction from an equator plane (CL) is 60% of a distance (HWH) in the axial direction from the equator plane (CL) to the reference ground-contact position (PH) is a tilt confirmation position (P60),
a ratio (B100/B60) of an equator ground-contact length (B100) measured along the equator plane (CL) to a reference ground-contact length (B60) at a position corresponding to a width of 60% of a ground-contact width (WC) of the ground-contact surface, on the ground-contact surface, is a shape index F60, and
the shape index F60 is not less than 1.00 and not greater than 1.20; and
when the tire (2, 102) is in a reference state, in which the tire (2, 102) is fitted on a standardized rim (R), the internal pressure of the tire (2, 102) is adjusted to a pressure equal to 92% of a standardized internal pressure, and no load is applied to the tire,
an angle (θ) of a tangent line (TL60) that is tangent to a contour line of the tread surface (22, 122) at the tilt confirmation position (P60) with respect to the axial direction in a meridian cross-section of the tire (2, 102) is not less than 2.5 degrees and not greater than 3.5 degrees.

2. The tire (2, 102) according to claim 1, wherein
a contour line of the tread surface (22, 122) in the meridian cross-section of the tire (2, 102) includes a plurality of arcs, wherein the contour line of the tread surface is obtained by measuring the outer surface shape of the tire (2, 102) in said reference state,
the plurality of arcs includes a first arc having a center on the equator plane (CL), a pair of second arcs each located axially outward of the first arc and connected to the first arc, and a pair of third arcs each located axially outward of the second arc and connected to the second arc, and
a ratio (Rc/Rm) of a radius (Rc) of the first arc to a radius (Rm) of the second arc is not less than 2.00 and not greater than 4.00.

3. The tire (2, 102) according to claim 2, wherein in said reference state a ratio (L2/L1) of a length (L2) of the second arc to a length (L1) of the first arc is not less than 0.80 and not greater than 1.00, wherein the length (L1) of the first arc means the length from an equator (PC), as the intersection of the outer surface (2G, 102G) and the equator plane (CL), to the boundary (CM) between the first arc and the second arc on a circle having the radius (Rc) of the first arc, and the length (L2) of the second arc means the length from the boundary (CM) to the boundary (MS) between the second arc and the third arc on a circle having the radius (Rm) of the second arc.

4. The tire (2, 102) according to any one of claims 1 to 3, wherein when a load equal to 70% of a standardized load is applied to the tire (2, 102) in the standard state and the tire (2, 102) is brought into contact with a flat surface and the camber angle of the tire (2, 102) is set to 0 degree,
a ratio (B100/B80) of the equator ground-contact length (B100) measured along the equator plane (CL) to a reference ground-contact length (B80) at a position corresponding to a width of 80% of the ground-contact width (WC) of the ground-contact surface, on the ground-contact surface, is a shape index F80, and
the shape index F80 is not less than 1.25 and not greater than 1.45.

5. The tire (2, 102) according to any one of claims 1 to 4, wherein when a load equal to 70% of a standardized load is applied to the tire (2, 102) in the standard state and the tire (2, 102) is brought into contact with a flat surface and the camber angle of the tire (2, 102) is set to 0 degree,
a ratio (B100/WC) of the equator ground-contact length (B100) to the ground-contact width (WC) is not less than 0.40 and not greater than 0.65.

6. The tire (2, 102) according to any one of claims 1 to 5, wherein
the tire (2, 102) has a nominal cross-sectional width of 215 mm or more, and
the tire (2, 102) has a nominal aspect ratio of 55% or less.

7. A tire (2, 102) comprising:
a pair of beads (10, 110);
a carcass (12, 112) extending on and between the pair of beads (10, 110);
a tread (4, 104) located radially outward of the carcass (12, 112); and
a pair of sidewalls (6, 106) located axially outward of the carcass (12, 112), wherein
an outer surface (2G, 102G) of the tire (2, 102) includes a tread surface (22, 122) configured to come into contact with a road surface, and a pair of side surfaces (26, 126) connected to the tread surface (22, 122), and
**characterized in that**
when the tire (2, 102) is in a standard state, in which the tire (2, 102) is fitted on a standardized rim (R) and an internal pressure of the tire (2, 102) is adjusted to a pressure equal to 92% of a standardized internal pressure, and when a load equal to 70% of a standardized load is applied to the tire (2, 102) in the standard state and the tire (2, 102) is brought into contact with a flat surface and the camber angle of the tire (2, 102) is set to 0 degree,
a position, on the tread surface (22, 122), corresponding to a ground-contact end (GE) of a ground-contact surface of the tire (2, 102) is a reference ground-contact position (PH),
a position, on the tread surface (22, 122), at which a distance (HW60) in an axial direction from an equator plane (CL) is 60% of a distance (HWH) in the axial direction from the equator plane (CL) to the reference ground-contact position (PH) is a tilt confirmation position (P60),
a ratio (B100/B80) of an equator ground-contact length (B100) measured along the equator plane (CL) to a reference ground-contact length (B80) at a position corresponding to a width of 80% of a ground-contact width (WC) of the ground-contact surface, on the ground-contact surface, is a shape index F80, and
the shape index F80 is not less than 1.25 and not greater than 1.45; and
when the tire (2, 102) is in a reference state, in which the tire (2, 102) is fitted on a standardized rim (R), the internal pressure of the tire (2, 102) is adjusted to a pressure equal to 92% of a standardized internal pressure, and no load is applied to the tire,
an angle (θ) of a tangent line (TL60) that is tangent to a contour line of the tread surface (22, 122) at the tilt confirmation position (P60) with respect to the axial direction in a meridian cross-section of the tire (2, 102) is not less than 2.5 degrees and not greater than 3.5 degrees.

8. The tire (2, 102) according to claim 7, wherein
a contour line of the tread surface (22, 122) in the meridian cross-section of the tire (2, 102) includes a plurality of arcs, wherein the contour line of the tread surface is obtained by measuring the outer surface shape of the tire (2, 102) in said reference state,
the plurality of arcs include a first arc having a center on the equator plane (CL), a pair of second arcs each located axially outward of the first arc and connected to the first arc, and a pair of third arcs each located axially outward of the second arc and connected to the second arc, and
a ratio (Rs/Rm) of a radius (Rs) of the third arc to a radius (Rm) of the second arc is not less than 0.30 and not greater than 0.40.

9. The tire (2, 102) according to claim 8, wherein in said reference state a ratio (HWMS/HWH) of a distance (HWMS) in an axial direction from the equator plane (CL) to a boundary (MS) between the second arc and the third arc to a distance (HWH) in the axial direction from the equator plane (CL) to the reference ground-contact position (PH) is not less than 60% and not greater than 90%.

10. The tire (2, 102) according to claim 8 or 9, wherein in said reference state a ratio (Rc/Rm) of a radius (Rc) of the first arc to the radius (Rm) of the second arc is not less than 2.00 and not greater than 4.00.

11. The tire (2, 102) according to claim 10, wherein in said reference state a ratio (L2/L1) of a length (L2) of the second arc to a length (L1) of the first arc is not less than 0.80 and not greater than 1.00, wherein the length (L1) of the first arc means the length from an equator (PC), as the intersection of the outer surface (2G, 102G) and the equator plane (CL), to the boundary (CM) between the first arc and the second arc on a circle having the radius (Rc) of the first arc, and the length (L2) of the second arc means the length from the boundary (CM) to the boundary (MS) between the second arc and the third arc on a circle having the radius (Rm) of the second arc.

12. The tire (2, 102) according to any one of claims 7 to 11, wherein when a load equal to 70% of a standardized load is applied to the tire (2, 102) in the standard state and the tire (2, 102) is brought into contact with a flat surface and the camber angle of the tire (2, 102) is set to 0 degree,
a ratio (B100/B60) of the equator ground-contact length (B100) measured along the equator plane (CL) to a reference ground-contact length (B60) at a position corresponding to a width of 60% of the ground-contact width (WC) of the ground-contact surface, on the ground-contact surface, is a shape index F60, and
the shape index F60 is not less than 1.00 and not greater than 1.20.

13. The tire (2, 102) according to any one of claims 7 to 12, wherein when a load equal to 70% of a standardized load is applied to the tire (2, 102) in the standard state and the tire (2, 102) is brought into contact with a flat surface and the camber angle of the tire (2, 102) is set to 0 degree,
a ratio (B100/WC) of the equator ground-contact length (B100) to the ground-contact width (WC) is not less than 0.40 and not greater than 0.65.

14. The tire (2, 102) according to any one of claims 7 to 13, wherein
the tire (2, 102) has a nominal cross-sectional width of 215 mm or more, and
the tire (2, 102) has a nominal aspect ratio of 55% or less.

## Patentansprüche

1. Reifen (2, 102), umfassend:
ein Paar Wülste (10, 110);
eine Karkasse (12, 112), die sich auf und zwischen dem Paar Wülsten (10, 110) erstreckt;
eine Lauffläche (4, 104), die radial außen von der Karkasse (12, 112) angeordnet ist; und
ein Paar Seitenwände (6, 106), die axial außen von der Karkasse (12, 112) angeordnet ist, wobei
eine Außenoberfläche (2G, 102G) des Reifens (2, 102) eine Laufflächenoberfläche (22, 122), die konfiguriert ist, um mit einer Straßenoberfläche in Kontakt zu kommen, und ein Paar Seitenoberflächen (26, 126), die mit der Laufflächenoberfläche (22, 122) verbunden sind, umfasst, und
**dadurch gekennzeichnet, dass**
wenn sich der Reifen (2, 102) in einem Standardzustand befindet, in dem der Reifen (2, 102) auf eine standardisierte Felge (R) aufgezogen ist und ein Innendruck des Reifens (2, 102) auf einen Druck gleich 92 % eines standardisierten Innendrucks eingestellt ist, und wenn eine Last gleich 70 % einer standardisierten Last auf den Reifen (2, 102) in dem Standardzustand ausgeübt wird und der Reifen (2, 102) mit einer flachen Oberfläche in Kontakt gebracht wird und der Sturzwinkel des Reifens (2, 102) auf 0 Grad eingestellt ist,
eine Position auf der Laufflächenoberfläche (22, 122), die einem Bodenkontaktende (GE) einer Bodenkontaktfläche des Reifens (2, 102) entspricht, eine Referenzbodenkontaktposition (PH) ist,
eine Position auf der Laufflächenoberfläche (22, 122), an der ein Abstand (HW60) in einer axialen Richtung von einer Äquatorebene (CL) 60 % eines Abstands (HWH) in der axialen Richtung von der Äquatorebene (CL) zu der Referenzbodenkontaktposition (PH) beträgt, eine Neigungsbestätigungsposition (P60) ist,
ein Verhältnis (B100/B60) einer Äquator-Bodenkontaktlänge (B100), die entlang der Äquatorebene (CL) gemessen wird, zu einer Referenzbodenkontaktlänge (B60) an einer Position, die einer Breite von 60 % einer Bodenkontaktbreite (WC) der Bodenkontaktfläche entspricht, auf der Bodenkontaktfläche ein Formindex F60 ist, und
der Formindex F60 nicht kleiner als 1,00 und nicht größer als 1,20 ist; und
wenn sich der Reifen (2, 102) in einem Referenzzustand befindet, in dem der Reifen (2, 102) auf eine standardisierte Felge (R) aufgezogen ist, der Innendruck des Reifens (2, 102) auf einen Druck gleich 92 % eines standardisierten Innendrucks eingestellt ist und keine Last auf den Reifen ausgeübt wird,
ein Winkel (θ) einer Tangentenlinie (TL60), die tangential zu einer Konturlinie der Lauffläche (22, 122) an der Neigungsbestätigungsposition (P60) in Bezug auf die axiale Richtung in einem Meridianquerschnitt des Reifens (2, 102) ist, nicht kleiner als 2,5 Grad und nicht größer als 3,5 Grad ist.

2. Reifen (2, 102) nach Anspruch 1, wobei
eine Konturlinie der Laufflächenoberfläche (22, 122) in dem Meridianquerschnitt des Reifens (2, 102) eine Vielzahl von Bögen umfasst, wobei die Konturlinie der Laufflächenoberfläche durch Messen der Außenoberflächenform des Reifens (2, 102) in dem Referenzzustand erhalten wird,
die Vielzahl von Bögen einen ersten Bogen mit einer Mitte auf der Äquatorebene (CL), ein Paar zweite Bögen, die sich jeweils axial außen von dem ersten Bogen befinden und mit dem ersten Bogen verbunden sind, und ein Paar dritte Bögen, die sich jeweils axial außen von dem zweiten Bogen befinden und mit dem zweiten Bogen verbunden sind, umfasst, und
ein Verhältnis (Rc/Rm) eines Radius (Rc) des ersten Bogens zu einem Radius (Rm) des zweiten Bogens nicht kleiner als 2,00 und nicht größer als 4,00 ist.

3. Reifen (2, 102) nach Anspruch 2, wobei in dem Referenzzustand ein Verhältnis (L2/L1) einer Länge (L2) des zweiten Bogens zu einer Länge (L1) des ersten Bogens nicht kleiner als 0,80 und nicht größer als 1,00 ist, wobei die Länge (L1) des ersten Bogens die Länge von einem Äquator (PC) als dem Schnittpunkt der Außenoberfläche (2G, 102G) und der Äquatorebene (CL) zu der Grenze (CM) zwischen dem ersten Bogen und dem zweiten Bogen auf einem Kreis mit dem Radius (Rc) des ersten Bogens bedeutet, und die Länge (L2) des zweiten Bogens die Länge von der Grenze (CM) zu der Grenze (MS) zwischen dem zweiten Bogen und dem dritten Bogen auf einem Kreis mit dem Radius (Rm) des zweiten Bogens bedeutet.

4. Reifen (2, 102) nach einem der Ansprüche 1 bis 3, wobei, wenn eine Last gleich 70 % einer standardisierten Last auf den Reifen (2, 102) in dem Standardzustand ausgeübt wird und der Reifen (2, 102) mit einer flachen Oberfläche in Kontakt gebracht wird und der Sturzwinkel des Reifens (2, 102) auf 0 Grad eingestellt ist,
ein Verhältnis (B100/B80) der Äquator-Bodenkontaktlänge (B100), die entlang der Äquatorebene (CL) gemessen wird, zu einer Referenzbodenkontaktlänge (B80) an einer Position auf der Bodenkontaktfläche, die einer Breite von 80 % der Bodenkontaktbreite (WC) der Bodenkontaktfläche entspricht, ein Formindex F80 ist, und
der Formindex F80 nicht kleiner als 1,25 und nicht größer als 1,45 ist.

5. Reifen (2, 102) nach einem der Ansprüche 1 bis 4, wobei, wenn eine Last gleich 70 % einer standardisierten Last auf den Reifen (2, 102) in dem Standardzustand ausgeübt wird und der Reifen (2, 102) mit einer flachen Oberfläche in Kontakt gebracht wird und der Sturzwinkel des Reifens (2, 102) auf 0 Grad eingestellt ist,
ein Verhältnis (B100/WC) der Äquator-Bodenkontaktlänge (B100) zu der Bodenkontaktbreite (WC) nicht kleiner als 0,40 und nicht größer als 0,65 ist.

6. Reifen (2, 102) nach einem der Ansprüche 1 bis 5, wobei
der Reifen (2, 102) eine Nennquerschnittsbreite von 215 mm oder mehr aufweist, und
der Reifen (2, 102) ein Nennaspektverhältnis von 55 % oder weniger aufweist.

7. Reifen (2, 102), umfassend:
ein Paar Wülste (10, 110);
eine Karkasse (12, 112), die sich auf und zwischen dem Paar Wülsten (10, 110) erstreckt;
eine Lauffläche (4, 104), die radial außen von der Karkasse (12, 112) angeordnet ist; und
ein Paar Seitenwände (6, 106), die axial außen von der Karkasse (12, 112) angeordnet ist, wobei
eine Außenoberfläche (2G, 102G) des Reifens (2, 102) eine Laufflächenoberfläche (22, 122), die konfiguriert ist, um mit einer Straßenoberfläche in Kontakt zu kommen, und ein Paar Seitenoberflächen (26, 126), die mit der Laufflächenoberfläche (22, 122) verbunden sind, umfasst, und
**dadurch gekennzeichnet, dass**
wenn sich der Reifen (2, 102) in einem Standardzustand befindet, in dem der Reifen (2, 102) auf eine standardisierte Felge (R) aufgezogen ist und ein Innendruck des Reifens (2, 102) auf einen Druck gleich 92 % eines standardisierten Innendrucks eingestellt ist, und wenn eine Last gleich 70 % einer standardisierten Last auf den Reifen (2, 102) in dem Standardzustand ausgeübt wird und der Reifen (2, 102) mit einer flachen Oberfläche in Kontakt gebracht wird und der Sturzwinkel des Reifens (2, 102) auf 0 Grad eingestellt ist,
eine Position auf der Laufflächenoberfläche (22, 122), die einem Bodenkontaktende (GE) einer Bodenkontaktfläche des Reifens (2, 102) entspricht, eine Referenzbodenkontaktposition (PH) ist,
eine Position auf der Laufflächenoberfläche (22, 122), an der ein Abstand (HW60) in einer axialen Richtung von einer Äquatorebene (CL) 60 % eines Abstands (HWH) in der axialen Richtung von der Äquatorebene (CL) zu der Referenzbodenkontaktposition (PH) beträgt, eine Neigungsbestätigungsposition (P60) ist,
ein Verhältnis (B100/B80) einer Äquator-Bodenkontaktlänge (B100), die entlang der Äquatorebene (CL) gemessen wird, zu einer Referenzbodenkontaktlänge (B80) an einer Position, die einer Breite von 80 % einer Bodenkontaktbreite (WC) der Bodenkontaktfläche entspricht, auf der Bodenkontaktfläche ein Formindex F80 ist, und
der Formindex F80 nicht kleiner als 1,25 und nicht größer als 1,45 ist; und
wenn sich der Reifen (2, 102) in einem Referenzzustand befindet, in dem der Reifen (2, 102) auf eine standardisierte Felge (R) aufgezogen ist, der Innendruck des Reifens (2, 102) auf einen Druck gleich 92 % eines standardisierten Innendrucks eingestellt ist und keine Last auf den Reifen ausgeübt wird,
ein Winkel (θ) einer Tangentenlinie (TL60), die tangential zu einer Konturlinie der Laufflächenoberfläche (22, 122) an der Neigungsbestätigungsposition (P60) in Bezug auf die axiale Richtung in einem Meridianquerschnitt des Reifens (2, 102) ist, nicht kleiner als 2,5 Grad und nicht größer als 3,5 Grad ist.

8. Reifen (2, 102) nach Anspruch 7, wobei
eine Konturlinie der Laufflächenoberfläche (22, 122) in dem Meridianquerschnitt des Reifens (2, 102) eine Vielzahl von Bögen umfasst, wobei die Konturlinie der Laufflächenoberfläche durch Messen der Außenoberflächenform des Reifens (2, 102) in dem Referenzzustand erhalten wird,
die Vielzahl von Bögen einen ersten Bogen mit einer Mitte auf der Äquatorebene (CL), ein Paar zweite Bögen, die jeweils axial außen von dem ersten Bogen angeordnet und mit dem ersten Bogen verbunden sind, und ein Paar dritte Bögen, die jeweils axial außen von dem zweiten Bogen angeordnet und mit dem zweiten Bogen verbunden sind, umfasst, und
ein Verhältnis (Rs/Rm) eines Radius (Rs) des dritten Bogens zu einem Radius (Rm) des zweiten Bogens nicht kleiner als 0,30 und nicht größer als 0,40 ist.

9. Reifen (2, 102) nach Anspruch 8, wobei in dem Referenzzustand ein Verhältnis (HWMS/HWH) eines Abstands (HWMS) in einer axialen Richtung von der Äquatorebene (CL) zu einer Grenze (MS) zwischen dem zweiten Bogen und dem dritten Bogen zu einem Abstand (HWH) in der axialen Richtung von der Äquatorebene (CL) zu der Referenzbodenkontaktposition (PH) nicht kleiner als 60 % und nicht größer als 90 % ist.

10. Reifen (2, 102) nach Anspruch 8 oder 9, wobei in dem Referenzzustand ein Verhältnis (Rc/Rm) eines Radius (Rc) des ersten Bogens zu dem Radius (Rm) des zweiten Bogens nicht kleiner als 2,00 und nicht größer als 4,00 ist.

11. Reifen (2, 102) nach Anspruch 10, wobei in dem Referenzzustand ein Verhältnis (L2/L1) einer Länge (L2) des zweiten Bogens zu einer Länge (L1) des ersten Bogens nicht kleiner als 0,80 und nicht größer als 1,00 ist, wobei die Länge (L1) des ersten Bogens die Länge von einem Äquator (PC) als dem Schnittpunkt der Außenoberfläche (2G, 102G) und der Äquatorebene (CL) zu der Grenze (CM) zwischen dem ersten Bogen und dem zweiten Bogen auf einem Kreis mit dem Radius (Rc) des ersten Bogens bedeutet, und die Länge (L2) des zweiten Bogens die Länge von der Grenze (CM) zu der Grenze (MS) zwischen dem zweiten Bogen und dem dritten Bogen auf einem Kreis mit dem Radius (Rm) des zweiten Bogens bedeutet.

12. Reifen (2, 102) nach einem der Ansprüche 7 bis 11, wobei, wenn eine Last gleich 70 % einer standardisierten Last auf den Reifen (2, 102) in dem Standardzustand ausgeübt wird und der Reifen (2, 102) mit einer flachen Oberfläche in Kontakt gebracht wird und der Sturzwinkel des Reifens (2, 102) auf 0 Grad eingestellt ist,
ein Verhältnis (B100/B60) der Äquator-Bodenkontaktlänge (B100), die entlang der Äquatorebene (CL) gemessen wird, zu einer Referenzbodenkontaktlänge (B60) an einer Position, die einer Breite von 60 % der Bodenkontaktbreite (WC) der Bodenkontaktfläche entspricht, auf der Bodenkontaktfläche ein Formindex F60 ist, und
der Formindex F60 nicht kleiner als 1,00 und nicht größer als 1,20 ist.

13. Reifen (2, 102) nach einem der Ansprüche 7 bis 12, wobei, wenn eine Last gleich 70 % einer standardisierten Last auf den Reifen (2, 102) in dem Standardzustand ausgeübt wird und der Reifen (2, 102) mit einer flachen Oberfläche in Kontakt gebracht wird und der Sturzwinkel des Reifens (2, 102) auf 0 Grad eingestellt ist,
ein Verhältnis (B100/WC) der Äquator-Bodenkontaktlänge (B100) zu der Bodenkontaktbreite (WC) nicht kleiner als 0,40 und nicht größer als 0,65 ist.

14. Reifen (2, 102) nach einem der Ansprüche 7 bis 13, wobei
der Reifen (2, 102) eine Nennquerschnittsbreite von 215 mm oder mehr aufweist, und
der Reifen (2, 102) ein Nennaspektverhältnis von 55 % oder weniger aufweist.

## Revendications

1. Pneumatique (2, 102) comprenant :
une paire de talons (10, 110) ;
une carcasse (12, 112) s'étendant sur et entre la paire de talons (10, 110) ;
une bande de roulement (4, 104) située radialement à l'extérieur de la carcasse (12,112) ; et
une paire de parois latérales (6, 106) situées axialement à l'extérieur de la carcasse (12, 112), dans lequel
une surface extérieure (2G, 102G) du pneumatique (2, 102) inclut une surface de bande de roulement (22, 122) configurée pour venir en contact avec une surface routière, et une paire de surfaces latérales (26, 126) connectées à la surface de bande de roulement (22, 122), et
**caractérisé en ce que**
quand le pneumatique (2, 102) est dans un état standard dans lequel le pneumatique (2, 102) est monté sur une jante standardisée (R) et une pression interne du pneumatique (2, 102) est ajustée à une pression égale à 92 % d'une pression interne standardisée, et quand une charge égale à 70 % d'une charge standardisée est appliquée sur le pneumatique (2, 102) dans l'état standard et que le pneumatique (2, 102) est amené en contact avec une surface plate et que l'angle de cambrure du pneumatique (2, 102) est fixé à 0 degré,
une position, sur la surface de bande de roulement (22, 122), correspondant à une extrémité de contact au sol (GE) d'une surface de contact au sol du pneumatique (2, 102), est une position de contact au sol de référence (PH),
une position, sur la surface de bande de roulement (22, 122), à laquelle une distance (HW60) dans une direction axiale depuis un plan d'équateur (CL) est 60 % d'une distance (HWH) dans la direction axiale depuis le plan d'équateur (CL) jusqu'à la position de contact au sol de référence (PH) est une position de confirmation d'inclinaison (P60),
un rapport (B100/B60) d'une longueur de contact au sol d'équateur (B100) mesurée le long du plan d'équateur (CL) sur une longueur de contact au sol de référence (B60) à une position correspondant à une largeur de 60 % d'une largeur de contact au sol (WC) de la surface de contact au sol, sur la surface de contact au sol, est un indice de forme F60, et
l'indice de forme F60 n'est pas inférieur à 1,00 et n'est pas supérieur à 1,20 ; et
quand le pneumatique (2,102) est dans un état de référence dans lequel le pneumatique (2, 102) est monté sur une jante standardisée (R), la pression interne du pneumatique (2, 102) est ajustée à une pression égale à 92 % d'une pression interne standardisée, et aucune charge n'est appliquée sur le pneumatique,
un angle (θ) d'une ligne tangente (TL60) qui est tangente à une ligne de contour de la surface de bande de roulement (22, 122) à la position de confirmation d'inclinaison (P60) par rapport à la direction axiale dans une section transversale méridienne du pneumatique (2, 102) n'est pas inférieur à 2,5 degrés et n'est pas supérieur à 3,5 degrés.

2. Pneumatique (2, 102) selon la revendication 1, dans lequel
une ligne de contour de la surface de bande de roulement (22, 122) dans la section transversale méridienne du pneumatique (2, 102) inclut une pluralité d'arcs, la ligne de contour de la surface de bande de roulement étant obtenue en mesurant la forme de surface extérieure du pneumatique (2, 102) dans ledit état de référence,
la pluralité d'arcs incluent un premier arc ayant un centre sur le plan d'équateur (CL), une paire de deuxièmes arcs situés chacun axialement à l'extérieur du premier arc et connectés au premier arc, et une paire de troisièmes arcs situés chacun axialement à l'extérieur du deuxième arc et connectés au deuxième arc, et
un rapport (Rc/Rm) d'un rayon (Rc) du premier arc sur un rayon (Rm) du deuxième arc n'est pas inférieur à 2,00 et n'est pas supérieur à 4,00.

3. Pneumatique (2, 102) selon la revendication 2, dans lequel, dans ledit état de référence, un rapport (L2/L1) d'une longueur (L2) du deuxième arc sur une longueur (L1) du premier arc n'est pas inférieur à 0,80 et n'est pas supérieur à 1,00, dans lequel la longueur (L1) du premier arc signifie la longueur depuis un équateur (PC), à titre d'intersection de la surface extérieure (2G, 102G) et du plan d'équateur (CL), jusqu'à la frontière (CM) entre le premier arc et le deuxième arc sur un cercle ayant le rayon (Rc) du premier arc, et la longueur (L2) du deuxième arc signifie la longueur depuis la frontière (CM) jusqu'à la frontière (MS) entre le deuxième arc et le troisième arc sur un cercle ayant le rayon (Rm) du deuxième arc.

4. Pneumatique (2, 102) selon l'une quelconque des revendications 1 à 3, dans lequel, quand une charge égale à 70 % d'une charge standardisée est appliquée sur le pneumatique (2, 102) dans l'état standard et que le pneumatique (2, 102) est amené en contact avec une surface plate et que l'angle de cambrure du pneumatique (2,102) est fixé à 0 degré,
un rapport (B100/B80) de la longueur de contact au sol d'équateur (B100) mesurée le long du plan d'équateur (CL) sur une longueur de contact au sol de référence (B80) à une position correspondant à une largeur de 80 % de la largeur de contact au sol (WC) de la surface de contact au sol, sur la surface de contact au sol, est un indice de forme F80, et
l'indice de forme n'est pas inférieur à 1,25 et n'est pas supérieur à 1,45.

5. Pneumatique (2, 102) selon l'une quelconque des revendications 1 à 4, dans lequel, quand une charge égale à 70 % d'une charge standardisée est appliquée sur le pneumatique (2, 102) dans l'état standard et que le pneumatique (2, 102) est amené en contact avec une surface plate et que l'angle de cambrure du pneumatique (2, 102) est fixé à 0 degré,
un rapport (B100/WC) de la longueur de contact au sol d'équateur (B100) sur la largeur de contact au sol (WC) n'est pas inférieur à 0,40 et n'est pas supérieur à 0,65.

6. Pneumatique (2, 102) selon l'une quelconque des revendications 1 à 5, dans lequel
le pneumatique (2, 102) a une largeur de section transversale nominale de 215 mm ou plus, et
le pneumatique (2, 102) a un rapport d'aspect nominal de 55 % ou moins.

7. Pneumatique (2, 102) comprenant :
une paire de talons (10, 110) ;
une carcasse (12, 112) s'étendant sur et entre la paire de talons (10, 110) ;
une bande de roulement (4, 104) située radialement à l'extérieur de la carcasse (12, 112) ; et
une paire de parois latérales (6, 106) situées axialement à l'extérieur de la carcasse (12, 112), dans lequel
une surface extérieure (2G, 102G) du pneumatique (2, 102) inclut une surface de bande de roulement (22, 122) configurée pour venir en contact avec une surface routière, et une paire de surfaces latérales (26, 126) connectées à la surface de bande de roulement (22, 122), et
**caractérisé en ce que**
quand le pneumatique (2, 102) est dans un état standard dans lequel le pneumatique (2, 102) est monté sur une jante standardisée (R) et une pression interne du pneumatique (2, 102) est ajustée à une pression égale à 92 % d'une pression interne standardisée, et quand une charge égale à 70 % d'une charge standardisée est appliquée sur le pneumatique (2, 102) dans l'état standard et que le pneumatique (2, 102) est amené en contact avec une surface plate et que l'angle de cambrure du pneumatique (2, 102) est fixé à 0 degré,
une position, sur la surface de bande de roulement (22, 122) correspondant à une extrémité de contact au sol (GE) d'une surface de contact au sol du pneumatique (2, 102) est une position de contact au sol de référence (PH),
une position, sur la surface de bande de roulement (22, 122), à laquelle une distance (HW60) dans une direction axiale depuis un plan d'équateur (CL) est 60 % d'une distance (HWH) dans la direction axiale depuis le plan d'équateur (CL) jusqu'à la position de contact au sol de référence (PH), est une position de confirmation d'inclinaison (P60),
un rapport (B100/B80) de la longueur de contact au sol d'équateur (B100) mesurée le long du plan d'équateur (CL) sur une longueur de contact au sol de référence (B80) à une position correspondant à une largeur de 80 % d'une largeur de contact au sol (WC) de la surface de contact au sol, sur la surface de contact au sol, est un indice de forme F80, et
l'indice de forme F80 n'est pas inférieur à 1,25 et n'est pas supérieur à 1,45 ; et
quand le pneumatique (2, 102) est dans un état de référence dans lequel le pneumatique (2, 102) est monté sur une jante standardisée (R), la pression interne du pneumatique (2, 102) est ajustée à une pression égale à 92 % d'une pression interne standardisée, et aucune charge n'est appliquée sur le pneumatique,
un angle (θ) d'une ligne tangente (TL60) qui est tangente à une ligne de contour de la surface de bande de roulement (22, 122) à la position de confirmation d'inclinaison (P60) par rapport à la direction axiale dans une section transversale méridienne du pneumatique (2, 102) n'est pas inférieur à 2,5 degrés et n'est pas supérieur à 3,5 degrés.

8. Pneumatique (2, 102) selon la revendication 7, dans lequel
une ligne de contour de la surface de bande de roulement (22, 122) dans la section transversale méridienne du pneumatique (2, 102) inclut une pluralité d'arcs, la ligne de contour de la surface de bande de roulement étant obtenue en mesurant la forme de surface extérieure du pneumatique (2, 102) dans ledit état de référence,
la pluralité d'arcs incluent un premier arc ayant un centre sur l'équateur de pneumatique (CL), une paire de deuxièmes arcs situés chacun axialement à l'extérieur du premier arc et connectés au premier arc, et une paire de troisièmes arcs situés chacun axialement à l'extérieur du deuxième arc et connectés au deuxième arc, et
un rapport (Rs/Rm) d'un rayon (Rs) du troisième arc sur un rayon (Rm) du deuxième arc n'est pas inférieur à 0,30 et n'est pas supérieur à 0,40.

9. Pneumatique (2, 102) selon la revendication 8, dans lequel, dans ledit état de référence, un rapport (HWMS/HWH) d'une distance (HWMS) dans une direction axiale depuis le plan d'équateur (CL) jusqu'à la frontière (MS) entre le deuxième arc et le troisième arc sur une distance (HWH) dans la direction axiale depuis le plan d'équateur (CL) sur la position de contact au sol de référence (PH) n'est pas inférieur à 60 % et n'est pas supérieur à 90 %.

10. Pneumatique (2, 102) selon la revendication 8 ou 9, dans lequel, dans ledit état de référence, un rapport (Rc/Rm) d'un rayon (Rc) du premier arc sur le rayon (Rm) du deuxième arc n'est pas inférieur à 2,00 et n'est pas supérieur à 4,00.

11. Pneumatique (2, 102) selon la revendication 10, dans lequel, dans ledit état de référence, un rapport (L2/L1) d'une longueur (L2) du deuxième arc sur une longueur (L1) du premier arc n'est pas inférieur à 0,80 et n'est pas supérieur à 1,00, dans lequel la longueur (L1) du premier arc signifie la longueur depuis un équateur (PC), à titre d'intersection de la surface extérieure (2G, 102G) et du plan d'équateur (CL), jusqu'à la frontière (CM) entre le premier arc et le deuxième arc sur un cercle ayant le rayon (Rc) du premier arc, et la longueur (L2) du deuxième arc signifie la longueur depuis la frontière (CM) jusqu'à la frontière (MS) entre le deuxième arc et le troisième arc sur un cercle ayant le rayon (Rm) du deuxième arc.

12. Pneumatique (2, 102) selon l'une quelconque des revendications 7 à 11, dans lequel, quand une charge égale à 70 % d'une charge standardisée est appliquée sur le pneumatique (2, 102) dans l'état standard et que le pneumatique (2, 102) est amené en contact avec une surface plate et que l'angle de cambrure du pneumatique (2, 102) est fixé à 0 degré,
un rapport (B100/B60) de la longueur de contact au sol d'équateur (B100) mesurée le long du plan d'équateur (CL) sur une longueur de contact au sol de référence (B60) à une position correspondant à une largeur de 60 % d'une largeur de contact au sol (WC) de la surface de contact au sol, sur la surface de contact au sol, est un indice de forme F60, et
l'indice de forme F60 n'est pas inférieur à 1,00 et n'est pas supérieur à 1,20.

13. Pneumatique (2, 102) selon l'une quelconque des revendications 7 à 12, dans lequel, quand une charge égale à 70 % d'une charge standardisée est appliquée sur le pneumatique (2, 102) dans l'état standard et que le pneumatique (2, 102) est amené en contact avec une surface plate et que l'angle de cambrure du pneumatique (2, 102) est fixé à 0 degré,
un rapport (B100/WC) de la longueur de contact au sol d'équateur (B100) sur la largeur de contact au sol (WC) n'est pas inférieur à 0,40 et n'est pas supérieur à 0,65.

14. Pneumatique (2, 102) selon l'une quelconque des revendications 7 à 13, dans lequel
le pneumatique (2, 102) a une largeur de section transversale nominale de 215 mm ou plus, et
le pneumatique (2, 102) a un rapport d'aspect nominal de 55 % ou moins.
